# EUROPEAN PATENT APPLICATION

(11) **EP 4 704 321 A1**
(43) Date of publication of application: **04.03.2026**
(21) Application number: 24796844.9
(22) Date of filing: 15.04.2024
(51) Int. Cl.: H02M 7/48

(54) **ELECTRIC POWER CONVERSION APPARATUS**

(30) Priority: 26.04.2023 JP 2023072637
(71) Applicant: Panasonic Intellectual Property Management Co., Ltd., Kadoma-shi, Osaka 571-0057 (JP)
(72) Inventor: HIGASHIYAMA, Koji, Moto-machi Kadoma-shi, Osaka 571-0057 (JP); NISHIMOTO, Taiki, Moto-machi Kadoma-shi, Osaka 571-0057 (JP); ARAI, Yasuhiro, Moto-machi Kadoma-shi, Osaka 571-0057 (JP)
(74) Representative: Novagraaf International SA
(86) International application number: PCT/JP2024/014914
(87) International publication number: WO 2024/225088

(57) **Abstract**

The problem is to reduce radiation noise. A power converter (100) includes a power converter circuit (11), a switch (8), a resonant capacitor (9), a resonant inductor (L1), a regenerative capacitor (15), and a controller (50). The switch (8) includes a third switching element (6) and a fourth switching element (7). The controller (50) controls a first switching element (1), a second switching element (2), the third switching element (6), and the fourth switching element (7). The controller (50) allows at least a part of a high-level period of a control signal for the switch (8) to overlap with a dead time period. The controller (50) causes the third switching element (6) to maintain, during a ringing period in which ringing occurs to a voltage across the third switching element (6), a state just before the ringing period.

## Description

### Technical Field

The present disclosure generally relates to a power converter. More particularly, the present disclosure relates to a power converter having the ability to convert DC power into AC power.

### Background Art

Patent Literature 1 discloses a power conversion system.

The power conversion system (power converter) of Patent Literature 1 includes: a switching means including a pair of main switch elements (first switching element and second switching element) which are connected to each other in series; and diodes (first diode and second diode) connected in antiparallel to the respective main switch elements. The power conversion system further includes: an auxiliary circuit for making soft switching of the respective main switch elements; and a controller. The auxiliary circuit includes two capacitors, a coil (resonant inductor), and an auxiliary switch. The controller generates control signals for performing PWM control on the respective main switch elements and outputs the control signals to the respective gates of the main switch elements. In addition, the controller also generates a control signal for controlling the ON/OFF states of the auxiliary switch and outputs the control signal to the gate of the auxiliary switch.

In the power converter, radiation noise increases in some cases.

### Citation List

### Patent Literature

Patent Literature 1: JP 2010-233306 A

### Summary of Invention

An object of the present disclosure is to provide a power converter having the ability to reduce the radiation noise.

A power converter according to an aspect of the present disclosure includes a first DC terminal and a second DC terminal, a power converter circuit, a switch, a resonant capacitor, a resonant inductor, a regenerative capacitor, and a controller. The power converter circuit includes a switching circuit. The switching circuit includes: a first switching element and a second switching element which are connected to each other in series; a first diode connected to the first switching element in antiparallel; and a second diode connected to the second switching element in antiparallel. In the switching circuit, the first switching element is connected to the first DC terminal and the second switching element is connected to the second DC terminal. The switch has a first end and a second end. The switch has the first end connected to a connection node between the first switching element and the second switching element. The resonant capacitor is connected between the first end of the switch and the second DC terminal. The resonant inductor is connected to the second end of the switch. The regenerative capacitor is connected between the resonant inductor and the second DC terminal. The controller controls the first switching element, the second switching element, and the switch. The switch includes a third switching element and a fourth switching element. The third switching element causes a current to flow therethrough from the resonant inductor when the third switching element is in an ON state. The fourth switching element causes a current to flow therethrough in an opposite direction from in the third switching element when the fourth switching element is in an ON state. The controller applies a control signal, of which a potential alternates between a high level and a low level, to each of the first switching element, the second switching element, the third switching element, and the fourth switching element. The controller sets a dead time period between a high-level period of the control signal for the first switching element and a high-level period of the control signal for the second switching element. The controller allows at least a part of a high-level period of the control signal for the third switching element to overlap with the dead time period. The controller causes the third switching element to maintain, during a ringing period in which ringing occurs to a voltage across the third switching element, a state just before the ringing period.

### Brief Description of Drawings

[FIG. 1] FIG. 1 is a circuit diagram of a system including a power converter according to a first embodiment;
[FIG. 2] FIG. 2 shows how duties and load currents, respectively corresponding to three-phase voltage instructions in an AC load connected to a plurality of AC terminals of the power converter, change with time;
[FIG. 3] FIG. 3 illustrates a basic operation performed by the power converter;
[FIG. 4] FIG. 4 illustrates the basic operation performed by the power converter;
[FIG. 5] FIG. 5 illustrates the basic operation performed by the power converter;
[FIG. 6] FIG. 6 illustrates how the power converter operates;
[FIG. 7] FIG. 7 illustrates how the power converter operates;
[FIG. 8] FIG. 8 is a timing chart illustrating how the power converter operates;
[FIG. 9] FIG. 9 is a timing chart illustrating how a comparative example of the power converter operates;
[FIG. 10] FIG. 10 is a characteristic diagram showing the results of measurement of radiation noise in an example and comparative example of the power converter;
[FIG. 11] FIG. 11 is a circuit diagram of a system including a power converter according to a second embodiment;
[FIG. 12] FIG. 12 is a circuit diagram of a system including a power converter according to a third embodiment;
[FIG. 13] FIG. 13 is a circuit diagram of a system including a power converter according to a fourth embodiment;
[FIG. 14] FIG. 14 is a circuit diagram of a system including a power converter according to a fifth embodiment;
[FIG. 15] FIG. 15 is a timing chart illustrating how the power converter operates;
[FIG. 16] FIG. 16 is a circuit diagram of a system including a power converter according to a sixth embodiment;
[FIG. 17] FIG. 17 is a circuit diagram of a system including a power converter according to a seventh embodiment; and
[FIG. 18] FIG. 18 is a circuit diagram of a system including a power converter according to an eighth embodiment.

### Description of Embodiments

### (First embodiment)

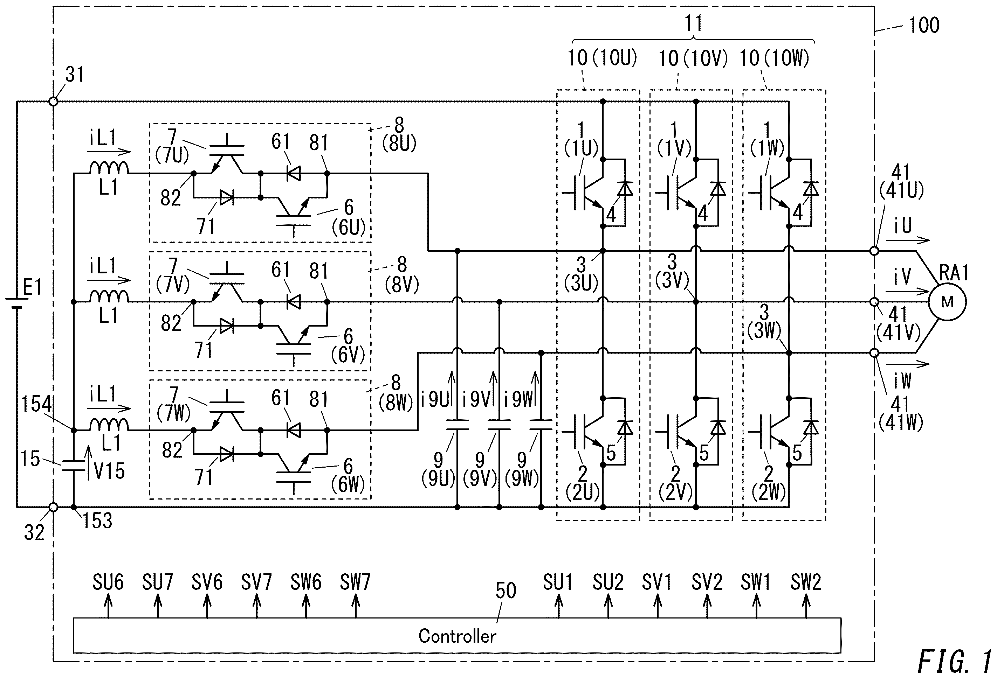

A power converter 100 according to a first embodiment will now be described with reference to FIGS. 1-8.

### (1) Overall configuration for power converter

The power converter 100 includes a first DC terminal 31 and a second DC terminal 32, and a plurality of (three in the example shown in FIG. 1) AC terminals 41 as shown in FIG. 1, for example. In the power converter 100, a DC power supply E1 is connected between the first DC terminal 31 and the second DC terminal 32. An AC load RA1 is connected to the plurality of AC terminals 41. The AC load RA1 may be, for example, a three-phase motor. The power converter 100 converts the DC output of the DC power supply E1 into AC power and outputs the AC power to the AC load RA1. The DC power supply E1 may include, for example, a solar cell or a fuel cell. The DC power supply E1 may include a DC-DC converter. In the power converter 100, if the plurality of AC terminals 41 are three AC terminals 41, then the AC power may be, for example, three-phase AC power having U-, V-, and W-phases.

The power converter 100 includes a power converter circuit 11, a plurality of (three in the example shown in FIG. 1) switches 8, a plurality of (three in the example shown in FIG. 1) resonant capacitors 9, a regenerative capacitor 15, a plurality of (three in the example shown in FIG. 1) resonant inductors L1, and a controller 50. Each of the plurality of switches 8 may be, for example, a bidirectional switch.

The power converter circuit 11 includes a plurality of (three in the example shown in FIG. 1) first switching elements 1 and a plurality of (three in the example shown in FIG. 1) second switching elements 2. In the power converter circuit 11, a plurality of (three in the example shown in FIG. 1) switching circuits 10, in each of which one of the plurality of first switching elements 1 and a corresponding one of the plurality of second switching elements 2 are connected one to one in series, are connected to each other in parallel. In the power converter circuit 11, the plurality of first switching elements 1 are connected to the first DC terminal 31, and the plurality of second switching elements 2 are connected to the second DC terminal 32.

The plurality of AC terminals 41 are provided one to one for the plurality of switching circuits 10. Each of the plurality of AC terminals 41 is connected to a connection node 3 between the first switching element 1 and the second switching element 2 of a corresponding one of the plurality of switching circuits 10.

The plurality of switches 8 are provided one to one for the plurality of switching circuits 10. Each of the plurality of switches 8 has a first end 81 and a second end 82. Each of the plurality of switches 8 has the first end 81 thereof connected to the connection node 3 between the first switching element 1 and the second switching element 2 of a corresponding one of the plurality of switching circuits 10.

The plurality of resonant capacitors 9 are provided one to one for the plurality of switches 8. Each of the plurality of resonant capacitors 9 is connected between the first end 81 of a corresponding one of the plurality of switches 8 and the second DC terminal 32.

Each of the plurality of resonant inductors L1 has a third end and a fourth end. In each of the plurality of resonant inductors L1, the fourth end thereof is connected to the regenerative capacitor 15. In each of the plurality of resonant inductors L1, the third end thereof is connected to the second end 82 of a corresponding one of the plurality of switches 8.

The regenerative capacitor 15 has a fifth end 153 and a sixth end 154. In the regenerative capacitor 15, the fifth end 153 thereof is connected to the second DC terminal 32 and the sixth end 154 thereof is connected to the respective fourth ends of the plurality of resonant inductors L1.

The controller 50 controls the plurality of first switching elements 1, the plurality of second switching elements 2, and the plurality of switches 8.

### (2) Details of power converter

In the following description, as for the plurality of switching circuits 10, the switching circuits 10 for the U-, V, and W-phases will be hereinafter referred to as a "switching circuit 10U," a "switching circuit 10V," and a "switching circuit 10W," respectively, for the sake of convenience of description. Also, in the following description, the first switching element 1 and second switching element 2 of the switching circuit 10U will be hereinafter referred to as a "first switching element 1U" and a "second switching element 2U," respectively. Likewise, in the following description, the first switching element 1 and second switching element 2 of the switching circuit 10V will be hereinafter referred to as a "first switching element 1V" and a "second switching element 2V," respectively. Likewise, in the following description, the first switching element 1 and second switching element 2 of the switching circuit 10W will be hereinafter referred to as a "first switching element 1W" and a "second switching element 2W," respectively. Furthermore, in the following description, the connection node 3 between the first switching element 1U and the second switching element 2U will be hereinafter referred to as a "connection node 3U," the connection node 3 between the first switching element 1V and the second switching element 2V will be hereinafter referred to as a "connection node 3V," and the connection node 3 between the first switching element 1W and the second switching element 2W will be hereinafter referred to as a "connection node 3W." Furthermore, in the following description, the AC terminal 41 connected to the connection node 3U will be hereinafter referred to as an "AC terminal 41U," the AC terminal 41 connected to the connection node 3V will be hereinafter referred to as an "AC terminal 41V," and the AC terminal 41 connected to the connection node 3W will be hereinafter referred to as an "AC terminal 41W." Furthermore, in the following description, the resonant capacitor 9 connected to the second switching element 2U in parallel will be hereinafter referred to as a "resonant capacitor 9U," the resonant capacitor 9 connected to the second switching element 2V in parallel will be hereinafter referred to as a "resonant capacitor 9V," and the resonant capacitor 9 connected to the second switching element 2W in parallel will be hereinafter referred to as a "resonant capacitor 9W." Furthermore, in the following description, the switch 8 connected to the connection node 3U will be hereinafter referred to as a "switch 8U," the switch 8 connected to the connection node 3V will be hereinafter referred to as a "switch 8V," and the switch 8 connected to the connection node 3W will be hereinafter referred to as a "switch 8W."

In the power converter 100, the higher-potential output terminal (positive electrode) of the DC power supply E1 is connected to the first DC terminal 31, and the lower-potential output terminal (negative electrode) of the DC power supply E1 is connected to the second DC terminal 32. Also, in the power converter 100, the U-, V-, and W-phase terminals of the AC load RA1 are connected to the three AC terminals 41U, 41V, and 41W, respectively.

In the power converter circuit 11, each of the plurality of (three in the example shown in FIG. 1) first switching elements 1 and the plurality of (three in the example shown in FIG. 1) second switching elements 2 has a control terminal, a first main terminal, and a second main terminal. The respective control terminals of the plurality of first switching elements 1 and the plurality of second switching elements 2 are connected to the controller 50. In each of the plurality of switching circuits 10 of the power converter 100, the first main terminal of the first switching element 1 is connected to the first DC terminal 31, the second main terminal of the first switching element 1 is connected to the first main terminal of the second switching element 2, and the second main terminal of the second switching element 2 is connected to the second DC terminal 32. In each of the plurality of switching circuits 10, the first switching element 1 is a high-side switching element (P-side switching element) and the second switching element 2 is a low-side switching element (N-side switching element). Each of the plurality of first switching elements 1 and the plurality of second switching elements 2 may be, for example, an insulated gate bipolar transistor (IGBT). Thus, in each of the plurality of first switching elements 1 and the plurality of second switching elements 2, the control terminal, the first main terminal, and the second main terminal thereof are a gate terminal, a collector terminal, and an emitter terminal, respectively.

The power converter circuit 11 further includes a plurality of (e.g., three) first diodes 4 which are connected one to one to the plurality of (e.g., three) first switching elements 1 in antiparallel and a plurality of (e.g., three) second diodes 5 which are connected one to one to the plurality of (e.g., three) second switching elements 2 in antiparallel. In each of the plurality of first diodes 4, the anode of the first diode 4 is connected to the second main terminal (emitter terminal) of the first switching element 1 corresponding to the first diode 4, and the cathode of the first diode 4 is connected to the first main terminal (collector terminal) of the first switching element 1 corresponding to the first diode 4. In each of the plurality of second diodes 5, the anode of the second diode 5 is connected to the second main terminal (emitter terminal) of the second switching element 2 corresponding to the second diode 5, and the cathode of the second diode 5 is connected to the first main terminal (collector terminal) of the second switching element 2 corresponding to the second diode 5.

The U-phase terminal of the AC load RA1 may be connected, for example, to the connection node 3U between the first switching element 1U and the second switching element 2U via the AC terminal 41U. The V-phase of the AC load RA1 may be connected, for example, to the connection node 3V between the first switching element 1V and the second switching element 2V via the AC terminal 41V. The W-phase of the AC load RA1 may be connected, for example, to the connection node 3W between the first switching element 1W and the second switching element 2W via the AC terminal 41W.

The plurality of resonant capacitors 9 are provided one to one for the plurality of switches 8. Each of the plurality of resonant capacitors 9 is connected between the first end 81 of a corresponding one of the plurality of switches 8 and the second DC terminal 32. The power converter 100 includes a plurality of resonant circuits. Each of the plurality of resonant circuits includes a corresponding one of the resonant capacitors 9 and a corresponding one of the resonant inductors L1.

Each of the plurality of switches 8 includes a third switching element 6 and a fourth switching element 7. Each of the plurality of (three in the example shown in FIG. 1) third switching elements 6 and the plurality of (three in the example shown in FIG. 1) fourth switching elements 7 has a control terminal, a first main terminal, and a second main terminal. The respective control terminals of the plurality of third switching elements 6 and the plurality of fourth switching elements 7 are connected to the controller 50. Each of the plurality of third switching elements 6 and the plurality of fourth switching elements 7 may be implemented as, for example, an IGBT. Thus, in each of the plurality of third switching elements 6 and the plurality of fourth switching elements 7, the control terminal, the first main terminal, and the second main terminal thereof are a gate terminal, a collector terminal, and an emitter terminal, respectively. In each of the plurality of switches 8, the third switching element 6 and the fourth switching element 7 are connected to each other in anti-series. In each of the plurality of switches 8, the first main terminal (collector terminal) of the third switching element 6 is connected to the first main terminal (collector terminal) of the fourth switching element 7. In each of the plurality of switches 8, the second main terminal (emitter terminal) of the third switching element 6 is connected to the connection node 3 of a corresponding one of the plurality of switching circuits 10, and the second main terminal (emitter terminal) of the fourth switching element 7 is connected to a corresponding one of the plurality of resonant inductors L1. Each of the plurality of switches 8 further includes a diode 61 connected to the third switching element 6 in antiparallel and a diode 71 connected to the fourth switching element 7 in antiparallel.

In the power converter 100, the switch 8U is connected to the connection node 3U between the first switching element 1U and the second switching element 2U. The switch 8V is connected to the connection node 3V between the first switching element 1V and the second switching element 2V The switch 8W is connected to the connection node 3W between the first switching element 1 W and the second switching element 2W. In the following description, the third switching element 6 and fourth switching element 7 of the switch 8U will be hereinafter referred to as a "third switching element 6U" and a "fourth switching element 7U," respectively, the third switching element 6 and fourth switching element 7 of the switch 8V will be hereinafter referred to as a "third switching element 6V" and a "fourth switching element 7V," respectively, and the third switching element 6 and fourth switching element 7 of the switch 8W will be hereinafter referred to as a "third switching element 6W" and a "fourth switching element 7W," respectively, for the sake of convenience of description.

The plurality of switches 8 are controlled by the controller 50. In other words, the third switching element 6U, the fourth switching element 7U, the third switching element 6V, the fourth switching element 7V, the third switching element 6W, and the fourth switching element 7W are controlled by the controller 50.

Each of the plurality of resonant inductors L1 has a third end and a fourth end. In each of the plurality of resonant inductors L1, the third end thereof is connected to the second end 82 of a corresponding one of the plurality of switches 8. The respective fourth ends of the plurality of resonant inductors L1 are connected to the sixth end 154 of the regenerative capacitor 15. The respective inductances of the plurality of resonant inductors L1 are equal to each other. That is to say, the respective inductances of the three resonant inductors L1 are equal to each other. As used herein, the expression "the respective inductances of the three resonant inductors L1 are equal to each other" refers to not only a situation where the respective inductances of two out of the three resonant inductors L1 are exactly equal to the inductance of the other resonant inductor L1 but also a situation where the inductance of each of the two resonant inductors L1 is equal to or greater than 95% and equal to or less than 105% of the inductance of the other resonant inductor L1.

The regenerative capacitor 15 is connected between the respective fourth ends of the plurality of resonant inductors L1 and the second DC terminal 32. The regenerative capacitor 15 may be, for example, a film capacitor.

The controller 50 controls the plurality of first switching elements 1, the plurality of second switching elements 2, and the plurality of switches 8. The agent that performs the functions of the controller 50 includes a computer system. The computer system includes a single or a plurality of computers. The computer system includes a processor and a memory as principal hardware components thereof. The computer system serves as the agent that performs the functions of the controller 50 according to the present disclosure by making the processor execute a program stored in the memory of the computer system. The program may be stored in advance in the memory of the computer system. Alternatively, the program may also be downloaded through a telecommunications line or be distributed after having been recorded in a non-transitory storage medium such as a memory card, an optical disc, or a hard disk drive (magnetic disk), any of which is readable for the computer system. The processor of the computer system may be made up of a single or a plurality of electronic circuits including a semiconductor integrated circuit (IC) or a large-scale integrated circuit (LSI). Those electronic circuits may be either integrated together on a single chip or distributed on multiple chips, whichever is appropriate. Those multiple chips may be aggregated together in a single device or distributed in multiple devices without limitation.

The controller 50 outputs control signals SU1, SV1, SW1 for controlling the ON/OFF states of the plurality of first switching elements 1U, 1V, 1W, respectively. Each of the control signals SU1, SV1, SW1 may be, for example, a pulse width modulation (PWM) signal having, for example, a potential level that alternates between a first potential level (hereinafter referred to as a "low level") and a second potential level (hereinafter referred to as a "high level") higher than the first potential level. The first switching elements 1U, 1V, 1W respectively turn ON when the control signals SU1, SV1, SW1 have the high level and respectively turn OFF when the control signals SU1, SV1, SW1 have the low level. In addition, the controller 50 also outputs control signals SU2, SV2, SW2 for controlling the ON/OFF states of the plurality of second switching elements 2U, 2V, 2W, respectively. Each of the control signals SU2, SV2, SW2 may be, for example, a PWM signal having, for example, a potential level that alternates between the first potential level (hereinafter referred to as a "low level") and the second potential level (hereinafter referred to as a "high level") higher than the first potential level. The second switching elements 2U, 2V, 2W respectively turn ON when the control signals SU2, SV2, SW2 have the high level and respectively turn OFF when the control signals SU2, SV2, SW2 have the low level.

The controller 50 generates, using a carrier signal having a saw-tooth waveform, the control signals SU1, SV1, SW1 for the plurality of first switching elements 1U, 1V, 1W, respectively, and the control signals SU2, SV2, SW2 for the plurality of second switching elements 2U, 2V, 2W, respectively. More specifically, the controller 50 generates, based on at least the carrier signal and a U-phase voltage instruction, the control signals SU1, SU2 to be applied to the first switching element 1U and the second switching element 2U, respectively. Also, the controller 50 generates, based on at least the carrier signal and a V-phase voltage instruction, the control signals SV1, SV2 to be applied to the first switching element 1V and the second switching element 2V, respectively. Furthermore, the controller 50 generates, based on at least the carrier signal and a W-phase voltage instruction, the control signals SW1, SW2 to be applied to the first switching element 1 W and the second switching element 2W, respectively. The U-phase voltage instruction, the V-phase voltage instruction, and the W-phase voltage instruction may be, for example, sinusoidal wave signals, of which the phases are different from each other by 120 degrees and of which the value (voltage instruction value) changes with time. Note that the waveform of the carrier signal does not have to be the saw-tooth waveform but may also be a triangular waveform. Also, the U-phase voltage instruction, the V-phase voltage instruction, and the W-phase voltage instruction each have one cycle of the same length. In addition, one cycle of the U-phase voltage instruction, the V-phase voltage instruction, and the W-phase voltage instruction is longer than one cycle of the carrier signal.

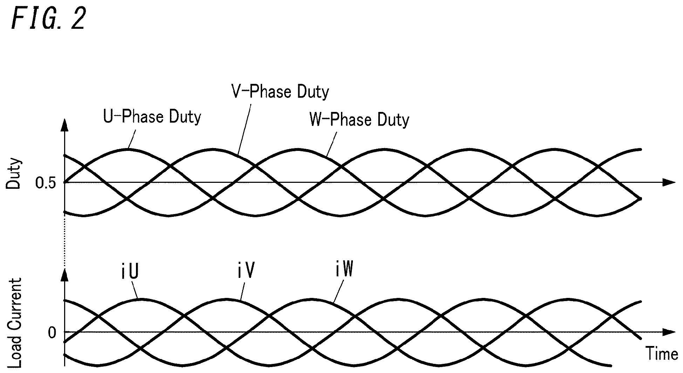

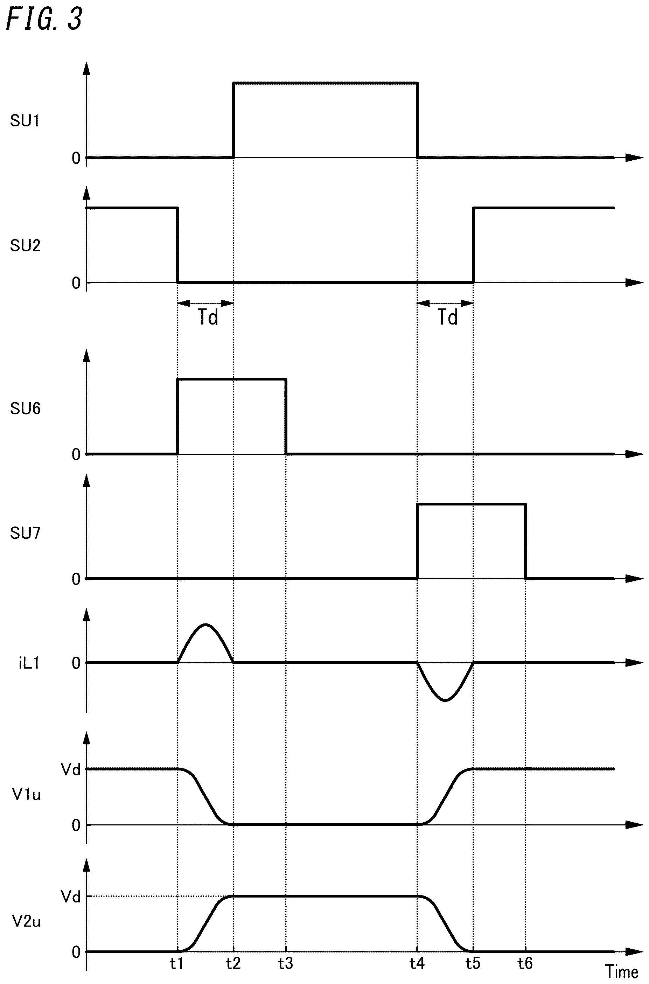

The duty of the control signals SU1, SU2 to be applied from the controller 50 to the first switching element 1U and the second switching element 2U, respectively, varies in accordance with the U-phase voltage instruction. In FIG. 2, the duty of the control signal SU1 is shown as a "U-phase duty." The controller 50 (refer to FIG. 1) generates the control signal SU1 to be applied to the first switching element 1U by comparing the U-phase voltage instruction with the carrier signal. The controller 50 generates the control signal SU2 to be applied to the second switching element 2U by inverting the control signal SU1 to be applied to the first switching element 1U. In addition, to prevent the respective ON periods of the first switching element 1U and the second switching element 2U from overlapping with each other, the controller 50 sets a dead time period Td (refer to FIG. 3) between a high-level period of the control signal SU1 and a high-level period of the control signal SU2.

The duty of the control signals SV1, SV2 to be applied from the controller 50 to the first switching element 1V and the second switching element 2V, respectively, varies in accordance with the V-phase voltage instruction. In FIG. 2, the duty of the control signal SV1 is shown as a "V-phase duty." The controller 50 (refer to FIG. 1) generates the control signal SV1 to be applied to the first switching element 1V by comparing the V-phase voltage instruction with the carrier signal. The controller 50 also generates the control signal SV2 to be applied to the second switching element 2V by inverting the control signal SV1 to be applied to the first switching element 1V. In addition, to prevent the respective ON periods of the first switching element 1V and the second switching element 2V from overlapping with each other, the controller 50 sets a dead time period between a high-level period of the control signal SV1 and a high-level period of the control signal SV2.

The duty of the control signals SW1, SW2 to be applied from the controller 50 to the first switching element 1W and the second switching element 2W, respectively, varies in accordance with the W-phase voltage instruction. In FIG. 2, the duty of the control signal SW1 is shown as a "W-phase duty." The controller 50 (refer to FIG. 1) generates the control signal SW1 to be applied to the first switching element 1W by comparing the W-phase voltage instruction with the carrier signal. The controller 50 generates the control signal SW2 to be applied to the second switching element 2W by inverting the control signal SW1 to be applied to the first switching element 1W. In addition, to prevent the respective ON periods of the first switching element 1W and the second switching element 2W from overlapping with each other, the controller 50 sets a dead time period Td between a high-level period of the control signal SW1 and a high-level period of the control signal SW2.

The U-phase voltage instruction, the V-phase voltage instruction, and the W-phase voltage instruction may be, for example, sinusoidal wave signals, of which the phases are different from each other by 120 degrees and of which the value changes with time. Thus, the respective duties (i.e., U-, V-, and W-phase duties) of the control signals SU1, SV1, SW1 change in the form of sinusoidal waves, of which the phases are different from each other by 120 degrees, as shown in FIG. 2, for example. In the same way, the respective duties of the control signals SU2, SV2, SW2 also change in the form of sinusoidal waves, of which the phases are different from each other by 120 degrees.

The controller 50 generates the respective control signals SU1, SU2, SV1, SV2, SW1, SW2 based on the carrier signal, the respective voltage instructions, and information about the state of the AC load RA1. For example, if the AC load RA1 is a three-phase motor, the information about the state of the AC load RA1 may include, for example, detection values provided by a plurality of current sensors for respectively detecting output currents (hereinafter referred to as "load currents") iU, iV, iW flowing respectively through the U-, V-, and W-phases of the AC load RA1.

The plurality of switches 8, the plurality of resonant inductors L1, the plurality of resonant capacitors 9, and the regenerative capacitor 15 are provided to make zero-voltage soft switching of the plurality of first switching elements 1 and the plurality of second switching elements 2. Note that in FIG. 1, the voltage across the regenerative capacitor 15 is designated by V15.

In this power converter 100, the controller 50 controls not only the plurality of first switching elements 1 and the plurality of second switching elements 2 of the power converter circuit 11 but also the plurality of switches 8 as well.

The controller 50 generates control signals SU6, SU7, SV6, SV7, SW6, SW7 for controlling the respective ON/OFF states of the third switching element 6U, the fourth switching element 7U, the third switching element 6V, the fourth switching element 7V, the third switching element 6W, and the fourth switching element 7W, respectively, and outputs the control signals SU6, SU7, SV6, SV7, SW6, SW7 to the respective gate terminals of the third switching element 6U, the fourth switching element 7U, the third switching element 6V, the fourth switching element 7V, the third switching element 6W, and the fourth switching element 7W.

If the third switching element 6U is ON and the fourth switching element 7U is OFF, the switch 8U allows a charging current that flows through the regenerative capacitor 15, the resonant inductor L1, the switch 8U, and the resonant capacitor 9U in this order to pass therethrough. The charging current is a current for charging the resonant capacitor 9U with electricity. On the other hand, if the third switching element 6U is OFF and the fourth switching element 7U is ON, the switch 8U allows a discharging current that flows through the resonant capacitor 9U, the switch 8U, the resonant inductor L1, and the regenerative capacitor 15 in this order to pass therethrough. The discharging current is a current for discharging electricity from the resonant capacitor 9U.

If the third switching element 6V is ON and the fourth switching element 7V is OFF, the switch 8V allows a charging current that flows through the regenerative capacitor 15, the resonant inductor L1, the switch 8V, and the resonant capacitor 9V in this order to pass therethrough. The charging current is a current for charging the resonant capacitor 9V with electricity. On the other hand, if the third switching element 6V is OFF and the fourth switching element 7V is ON, the switch 8V allows a discharging current that flows through the resonant capacitor 9V, the switch 8V, the resonant inductor L1, and the regenerative capacitor 15 in this order to pass therethrough. The discharging current is a current for discharging electricity from the resonant capacitor 9V.

If the third switching element 6W is ON and the fourth switching element 7W is OFF, the switch 8W allows a charging current that flows through the regenerative capacitor 15, the resonant inductor L1, the switch 8W, and the resonant capacitor 9W in this order to pass therethrough. The charging current is a current for charging the resonant capacitor 9W with electricity. On the other hand, if the third switching element 6W is OFF and the fourth switching element 7W is ON, the switch 8W allows a discharging current that flows through the resonant capacitor 9W, the switch 8W, the resonant inductor L1, and the regenerative capacitor 15 in this order to pass therethrough. The discharging current is a current for discharging electricity from the resonant capacitor 9W.

### (3) Operation of power converter

In the following description, as for a current iL1 flowing through the resonant inductor L1, if the current flows in the direction indicated by the arrow shown in FIG. 1, then the polarity of the current iL1 is supposed to be positive. On the other hand, if the current iL1 flows in the direction opposite from the one indicated by the arrow shown in FIG. 1, then the polarity of the current iL1 is supposed to be negative. In addition, in the following description, as for each of the load currents iU, iV, iW respectively flowing through the U-, V-, and W-phases of the AC load RA1, if the load current iU, iV, iW flows in the direction indicated by a corresponding one of the arrows shown in FIG. 1, then the polarity of the load current iU, iV, iW is supposed to be positive. On the other hand, if the load current iU, iV, iW flows in the direction opposite from the one indicated by the arrow shown in FIG. 1, then the polarity of the load current iU, iV, iW is supposed to be negative. Furthermore, as for each of currents i9U, i9V, i9W flowing through the resonant capacitors 9U, 9V, 9W, respectively, if the current i9U, i9V, i9W flows in the direction indicated by a corresponding one of the arrows shown in FIG. 1, then the polarity of the current i9U, i9V, i9W is supposed to be positive. On the other hand, if the current i9U, i9V, i9W flows in the direction opposite from the one indicated by the arrow shown in FIG. 1, then the polarity of the current i9U, 19V, i9W is supposed to be negative. Thus, in the case of the discharging operation of discharging electricity from the resonant capacitor 9U, 9V, 9W, the polarity of the current i9U, i9V, i9W is positive. On the other hand, in the case of the charging operation of charging the resonant capacitor 9U, 9V, 9W with electricity, the polarity of the current i9U, i9V, i9W is negative.

The controller 50 sets, with respect to each of the plurality of switching circuits 10, a dead time period Td between a high-level period of the control signal SU1, SV1, SW1 for the first switching element 1U, 1V, 1W and a high-level period of the control signal SU2, SV2, SW2 for the second switching element 2U, 2V, 2W.

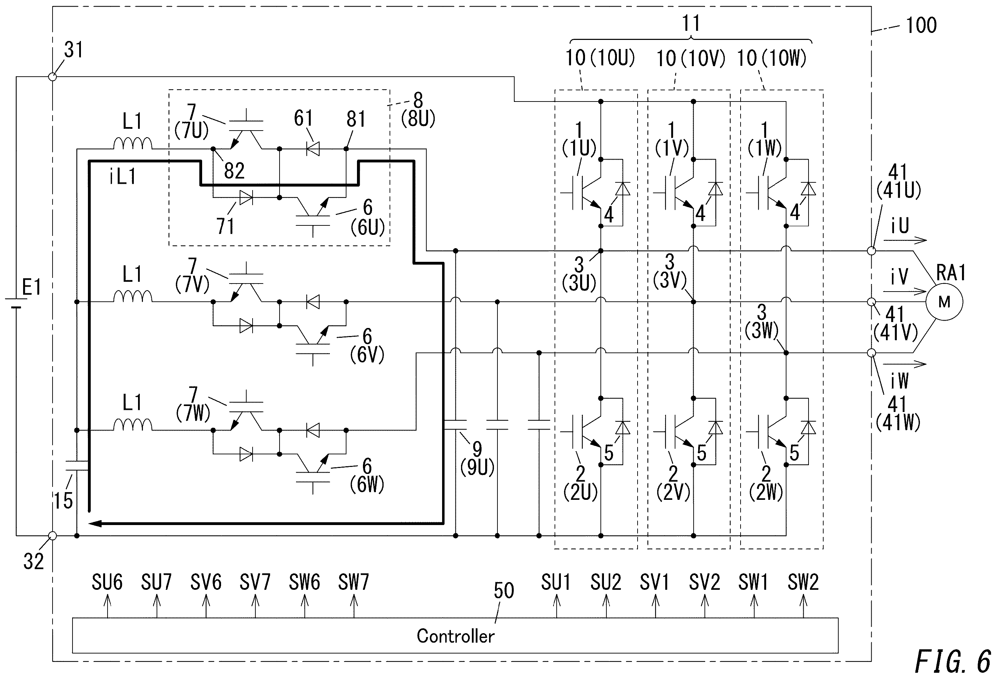

Next, a basic operation of the controller 50 to make zero-voltage soft switching of each of the plurality of first switching elements 1 and the plurality of second switching elements 2 will be described with reference to FIGS. 1-5. After that, its operation in a ringing period in which ringing occurs and before and after the ringing period will be described with reference to FIGS. 6-8.

### (3.1) Basic operation

When the zero-voltage soft switching is performed on the first switching element 1, the voltage across the first switching element 1 needs to be reduced to zero just before the first switching element 1 as the target of zero-voltage soft switching turns ON. When the zero-voltage soft switching is performed on the second switching element 2, the voltage across the second switching element 2 needs to be reduced to zero just before the second switching element 2 as the target of zero-voltage soft switching turns ON. In the following description, the switching element (which is either the first switching element 1 or the second switching element 2) as the target of the zero-voltage soft switching will be hereinafter referred to as a "target switching element."

The basic operation of the controller 50 changes according to the polarity (i.e., either positive or negative) of a load current flowing through the AC terminal 41 connected to the target switching element and depending on whether the resonant capacitor 9 connected to the target switching element in series or in parallel is performing the charging operation or the discharging operation. The load current iU, iV, iW has positive polarity when flowing from the AC terminal 41 toward the AC load RA1 and has negative polarity when flowing from the AC load RA1 toward the AC terminal 41. While the resonant capacitor 9 is performing the charging operation, the voltage across the resonant capacitor 9 increases. On the other hand, while the resonant capacitor 9 is performing the discharging operation, the voltage across the resonant capacitor 9 decreases. The voltage across each of the plurality of second switching elements 2 is the same as the voltage across the resonant capacitor 9 connected to the second switching element 2 in parallel.

If the target of the soft switching is a first switching element 1 (hereinafter referred to as a "target first switching element 1") and the polarity of the load current flowing through the AC terminal 41 connected to the target first switching element 1 is positive, then the controller 50 turns ON the third switching element 6 corresponding to the target first switching element 1. In this manner, the controller 50 causes the resonant inductor L1 and resonant capacitor 9 connected to the target first switching element 1 to produce resonance, thereby charging the resonant capacitor 9 with electric charges supplied from the regenerative capacitor 15 and reducing the voltage across the target first switching element 1 to zero. This allows the power converter 100 to make zero-voltage soft switching of the target first switching element 1.

On the other hand, if the polarity of the load current flowing through the AC terminal 41 connected to a target second switching element 2 is negative, then the controller 50 turns ON the fourth switching element 7 corresponding to the target second switching element 2. In this manner, the controller 50 causes the resonant capacitor 9 and the resonant inductor L1 connected to the target second switching element 2 to produce resonance, thereby discharging electricity from resonant capacitor 9 and reducing the voltage across the target second switching element 2 to zero. This allows the power converter 100 to make zero-voltage soft switching of the target second switching element 2.

The control signals SU1, SU2, the control signals SU6, SU7, the current iL1 flowing through the resonant inductor L1, the voltage V1u across the first switching element 1U, and the voltage V2u across the second switching element 2U in a situation where the target switching element is the first switching element 1U of the switching circuit 10U and in a situation where the target switching element is the second switching element 2U thereof are shown in FIG. 3. Also, the dead time period Td that the controller 50 sets to prevent the first switching element 1U and the second switching element 2U of the same phase from turning ON simultaneously is also shown in FIG. 3. Furthermore, the voltage value of the DC power supply E1 is shown as Vd in FIG. 3.

If the target switching element is the first switching element 1U, then the voltage V2u across the second switching element 2U becomes equal to Vd in the switching circuit 10U at a time t2 when the dead time period Td ends just before the high-level period of the control signal SU1 and the voltage V1u across the first switching element 1U goes zero at the time t2 when the dead time period Td ends just before the high-level period of the control signal SU1. Thus, when the control signal SU1 changes from low level to high level at the time t2, the first switching element 1U is subjected to zero-voltage soft switching. In the example shown in FIG. 3, the current iL1 flowing through the resonant inductor L1 starts to flow at the time t1 when the high-level period of the control signal SU6 begins and goes zero at the time t2 when the dead time period Td ends. The control signal SU6 changes from high level to low level at a time t3 which is later than the time t2. The time t3 will be described later in the "(3.2) Operation in ringing period in which ringing occurs and before and after the ringing period" section. The current iL1 flowing between the times t1 and t2 is a resonant current (i.e., a charging current for the resonant capacitor 9U) that flows from the regenerative capacitor 15 to the resonant capacitor 9U via the resonant inductor L1.

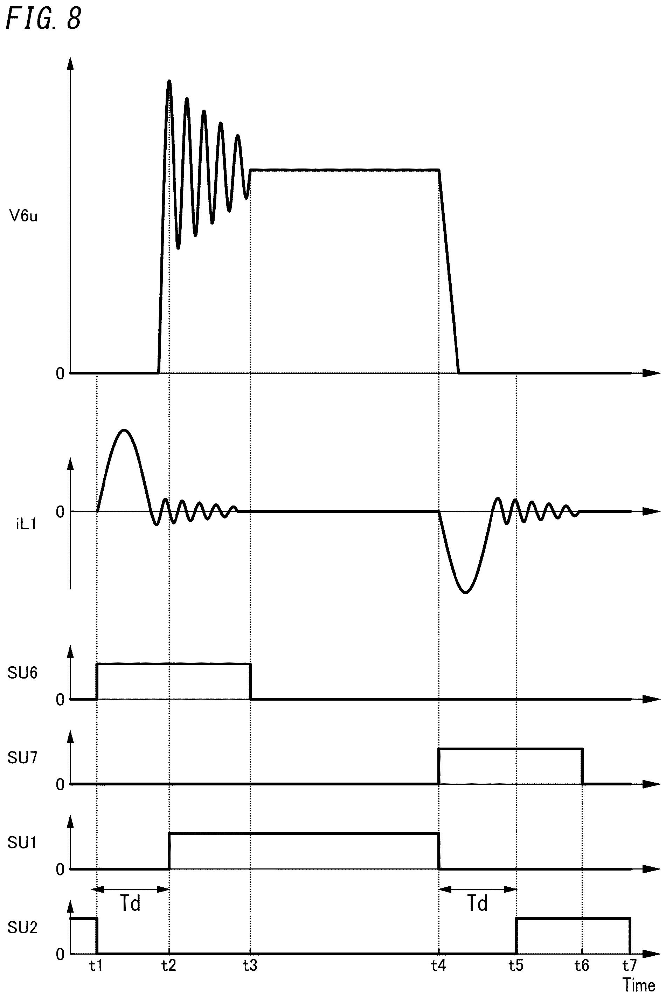

On the other hand, if the target switching element is the second switching element 2U, then the voltage V1u across the first switching element 1U becomes equal to Vd in the switching circuit 10U at a time t5 when the dead time period Td ends just before the high-level period of the control signal SU2 and the voltage V2u across the second switching element 2U goes zero at the time t5 when the dead time period Td ends. Thus, when the control signal SU2 changes from low level to high level at the time t5, the second switching element 2U is subjected to zero-voltage soft switching. In the example shown in FIG. 3, the current iL1 flowing through the resonant inductor L1 starts to flow at the time t4 when the high-level period of the control signal SU7 begins and goes zero at the time t5 when the dead time period Td ends. The control signal SU7 changes from high level to low level at a time t6 which is later than the time t5. The time t6 is earlier than a time t7 (refer to FIG. 8) when the control signal SU2 changes from high level to low level but may also be simultaneous with the time t7. That is to say, the time t6 may be simultaneous with, or earlier than, the time t7, whichever is appropriate. The current iL1 flowing between the times t4 and t5 is a resonant current (i.e., a discharging current for the resonant capacitor 9U) that flows from the resonant capacitor 9U to the resonant inductor L1.

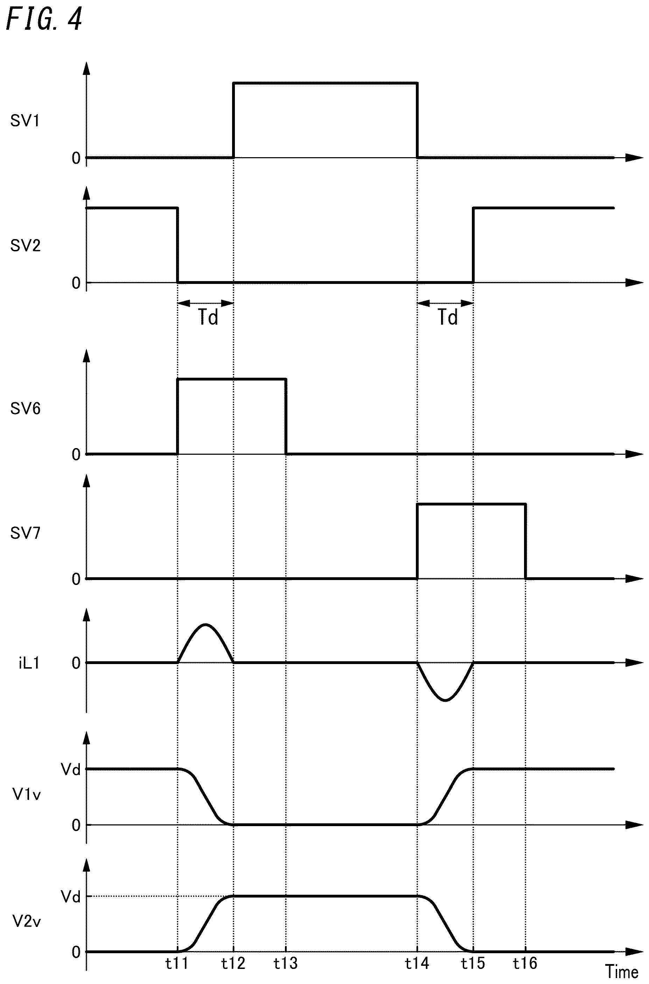

The control signals SV1, SV2, the control signals SV6, SV7, the current iL1, the voltage V1v across the first switching element 1V, and the voltage V2v across the second switching element 2V in a situation where the target switching element is the first switching element 1V of the switching circuit 10V and in a situation where the target switching element is the second switching element 2V thereof are shown in FIG. 4.

If the target switching element is the first switching element 1V, then the voltage V2v across the second switching element 2V becomes equal to Vd in the switching circuit 10V at a time t12 when the dead time period Td ends just before the high-level period of the control signal SV1 and the voltage V1v across the first switching element 1V goes zero at the time t12 when the dead time period Td ends just before the high-level period of the control signal SV1. Thus, when the control signal SV1 changes from low level to high level at the time t12, the first switching element 1V is subjected to zero-voltage soft switching. In the example shown in FIG. 4, the current iL1 flowing through the resonant inductor L1 starts to flow at a time t11 when the high-level period of the control signal SV6 begins and goes zero at the time t12 when the dead time period Td ends. The control signal SV6 changes from high level to low level at a time t13 which is later than the time t12. The current iL1 flowing between the times t11 and t12 is a resonant current (i.e., a charging current for the resonant capacitor 9V) that flows from the regenerative capacitor 15 to the resonant capacitor 9V via the resonant inductor L1.

On the other hand, if the target switching element is the second switching element 2V, then the voltage V1v across the first switching element 1V becomes equal to Vd in the switching circuit 10V at a time t15 when the dead time period Td ends just before the high-level period of the control signal SV2 and the voltage V2v across the second switching element 2V goes zero at the time t15 when the dead time period Td ends. Thus, when the control signal SV2 changes from low level to high level at the time t15, the second switching element 2V is subjected to zero-voltage soft switching. In the example shown in FIG. 4, the current iL1 flowing through the resonant inductor L1 starts to flow at a time t14 when the high-level period of the control signal SV7 begins and goes zero at the time t15 when the dead time period Td ends. The control signal SV7 changes from high level to low level at a time t16 which is later than the time t15. The time t16 is earlier than a time when the control signal SV2 changes from high level to low level. The current iL1 flowing between the times t14 and t15 is a resonant current (i.e., a discharging current for the resonant capacitor 9V) that flows from the resonant capacitor 9V to the resonant inductor L1.

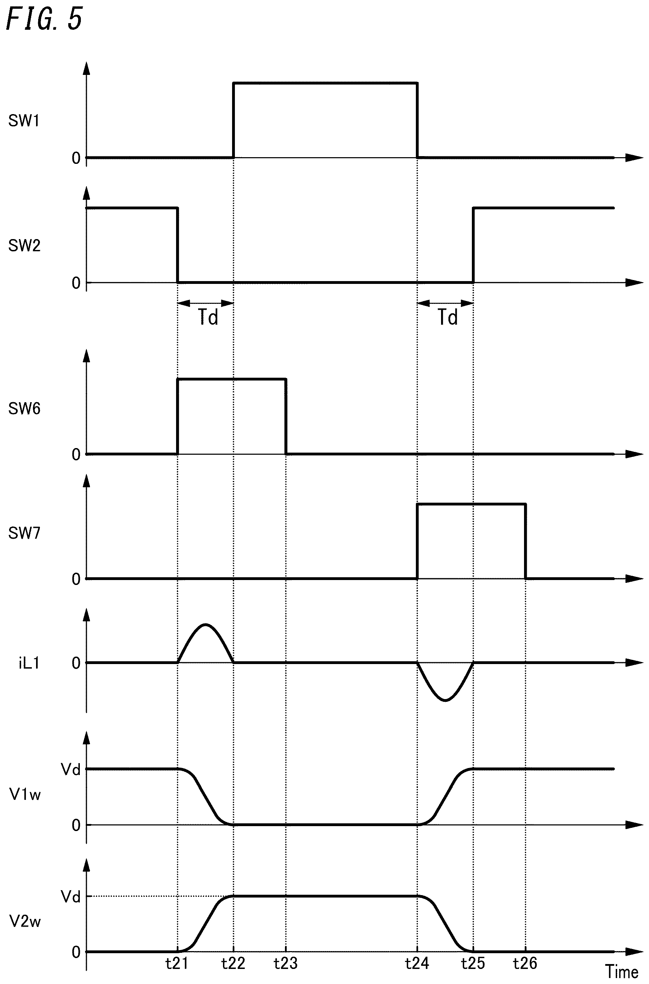

The control signals SW1, SW2, SW6, SW7, the current iL1, the voltage V1w across the first switching element 1W, and the voltage V2w across the second switching element 2W in a situation where the target switching element is the first switching element 1W or the second switching element 2W of the switching circuit 10W are shown in FIG. 5.

If the target switching element is the first switching element 1W, then the voltage V2w across the second switching element 2W becomes equal to Vd in the switching circuit 10W at a time t22 when the dead time period Td ends just before the high-level period of the control signal SW1 and the voltage V1w across the first switching element 1W goes zero at the time t22 when the dead time period Td ends just before the high-level period of the control signal SW1. Thus, when the control signal SW1 changes from low level to high level at the time t22, the first switching element 1W is subjected to zero-voltage soft switching. In the example shown in FIG. 5, the current iL1 flowing through the resonant inductor L1 starts to flow at a time t21 when the high-level period of the control signal SW6 begins and goes zero at the time t22 when the dead time period Td ends. The control signal SW6 changes from high level to low level at a time t23 which is later than the time t22. The current iL1 flowing between the times t21 and t22 is a resonant current (i.e., a charging current for the resonant capacitor 9W) that flows from the regenerative capacitor 15 to the resonant capacitor 9W via the resonant inductor L1.

On the other hand, if the target switching element is the second switching element 2W, then the voltage V1w across the first switching element 1W becomes equal to Vd in the switching circuit 10W at a time t25 when the dead time period Td ends just before the high-level period of the control signal SW2 and the voltage V2w across the second switching element 2W goes zero at the time t25 when the dead time period Td ends. Thus, when the control signal SW2 changes from low level to high level at the time t25, the second switching element 2W is subjected to zero-voltage soft switching. In the example shown in FIG. 5, the current iL1 flowing through the resonant inductor L1 starts to flow at the time t24 when the high-level period of the control signal SW7 begins and goes zero at the time t25 when the dead time period Td ends. The control signal SW7 changes from high level to low level at a time t26 which is later than the time t25. The time t26 is earlier than a time when the control signal SW2 changes from high level to low level. The current iL1 flowing between the times t24 and t25 is a resonant current (i.e., a discharging current for the resonant capacitor 9W) that flows from the resonant capacitor 9W to the resonant inductor L1.

### (3.2) Operation in ringing period in which ringing occurs and before and after the ringing period

The operation in a ringing period in which ringing occurs and before and after the ringing period will be described with reference to FIGS. 6-8.

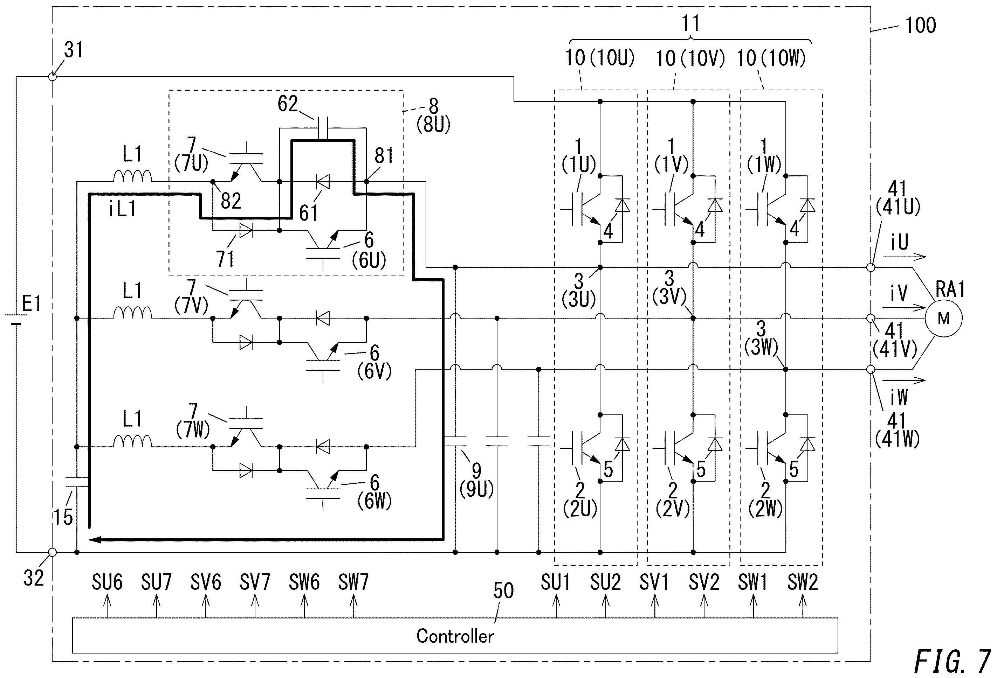

In FIG. 6, the current path of a current iL1 flowing through the resonant inductor L1 immediately after the current iL1 flowing through the resonant inductor L1 has gone zero in a situation where the third switching element 6U of the U-phase switch 8U is ON and the fourth switching element 7U thereof is OFF (i.e., in the first operation mode) is indicated by the bold line as an example. In FIG. 7, the current path of a current iL1 flowing through the resonant inductor L1 immediately after the third switching element 6U of the switch 8U has been turned OFF when a transition is made from the state shown in FIG. 6 to a state where the third switching element 6U is OFF and the fourth switching element 7U is OFF (i.e., the second operation mode) is indicated by the bold line as an example. In addition, a parasitic capacitor 62 for the third switching element 6U is also shown in FIG. 7.

In the power converter 100, immediately after the current flowing through the resonant inductor L1 has gone zero, a recovery current flows through the switch 8U, and therefore, the current iL flows along the current path shown in FIG. 6. Specifically, the current iL1 flows along a current path that passes through the regenerative capacitor 15, the resonant inductor L1, the diode 71, the third switching element 6U, the resonant capacitor 9U, and the regenerative capacitor 15 in this order.

In the power converter 100, if a transition is made from the first operation mode to the second operation mode, then the current iL1 flows along the current path shown in FIG. 7. Specifically, the current iL1 flows along a current path that passes through the regenerative capacitor 15, the resonant inductor L1, the diode 71, the parasitic capacitor 62, the resonant capacitor 9U, and the regenerative capacitor 15 in this order. Note that illustration of all parasitic capacitors but the parasitic capacitor 62 is omitted from FIG. 7. On the other hand, illustration of all parasitic capacitors, including the parasitic capacitor 62, is omitted from FIG. 1.

Meanwhile, in this power converter 100, it is not until the current flowing through the resonant inductor L1 has gone zero that ringing occurs. In addition, in the power converter 100, ringing also occurs when the voltage V6u across the third switching element 6U of the switch 8U rises from zero volts. Ringing occurs to the voltage V6u across the third switching element 6U at the timing when the current iL1 flowing through the resonant inductor L1 goes zero.

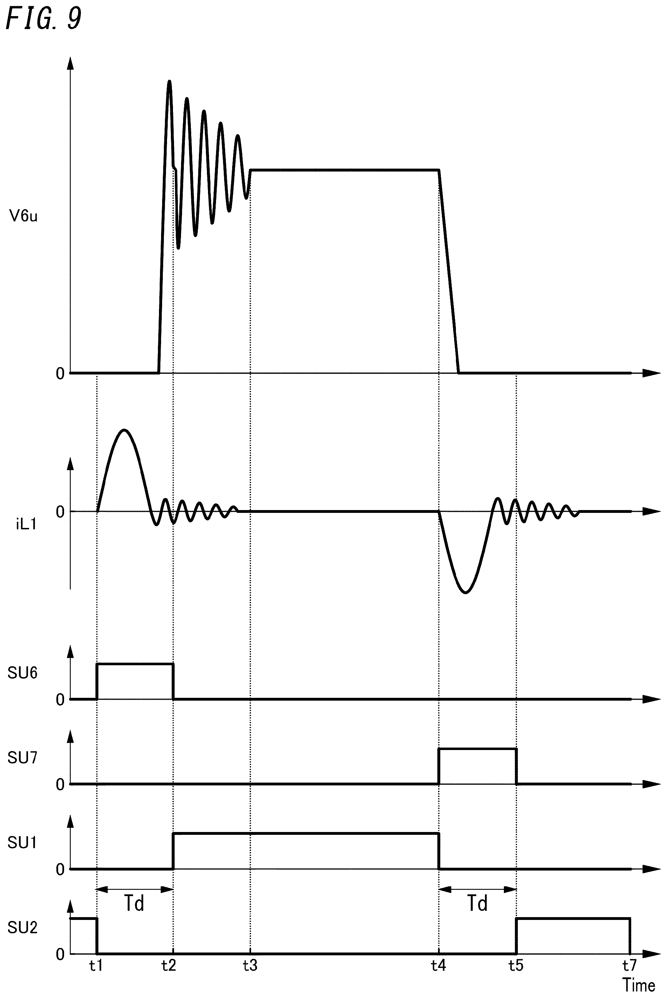

In a comparative example for the power converter 100 according to the first embodiment, when ringing is occurring to the voltage V6u across the third switching element 6U, the control signal SU6 changes from high level to low level as shown in FIG. 9. In that case, the ringing waveform of the voltage V6u across the third switching element 6U is distorted (i.e., ringing waveform noise is superposed) at the timing when the third switching element 6U is turned OFF (at a time t2 in the example shown in FIG. 9).

In contrast, in the power converter 100 according to the first embodiment, the controller 50 causes the third switching element 6U to maintain, during a ringing period in which ringing occurs to a voltage V6u across the third switching element 6U, a state just before the ringing period as shown in FIG. 8 (i.e., ON state in the example shown in FIG. 8). As used herein, the phrase "the ringing period in which ringing occurs" refers to a period in which ringing would occur to the voltage V6u across the third switching element 6U when the power converter 100 is designed and is determined during the design stage. As used herein, the phrase "to cause the third switching element 6U to maintain the state just before the ringing period" means causing the third switching element 6U to maintain the ON state by keeping the level of the control signal SU6 at high level. This allows the controller 50 to estimate the ringing period in which ringing occurs before the timing at which the control signal SU6 for the third switching element 6U is switched from high level to low level (i.e., at the time t2 in the example shown in FIG. 8) even without monitoring the voltage V6u across the third switching element 6U. During the ringing period thus estimated, the controller 50 causes the third switching element 6U to maintain the state just before the ringing period thus estimated, thus reducing the chances of making the ringing waveform distorted. In the power converter 100 according to the first embodiment, the controller 50 changes the control signal SU6 from high level to low level at the timing when the ringing period for the voltage V6u across the third switching element 6U ends (at a time t3 in the example shown in FIG. 8). As used herein, the phrase "the timing when the ringing period for the voltage V6u across the third switching element 6U ends" refers to a timing when the amplitude of ringing goes zero. However, this is only an example and should not be construed as limiting. The timing does not have to the timing when the amplitude of ringing goes zero but may also be a timing when the amplitude of ringing becomes equal to or less than a threshold value. The threshold value is a value determined during the design stage of the power converter 100. For example, the threshold value may be 10% of the steady-state voltage of the voltage V6u across the third switching element 6U which is determined during the design stage. Note that the control signals SU1, SU2, SU6, SU7, the current iL1 flowing through the resonant inductor L1, and the voltage V6u across the third switching element 6U are shown in FIGS. 8 and 9.

The ringing period of ringing that occurs when the voltage V6u across the U-phase third switching element 6U rises from zero volts and the operation of the controller 50 during the ringing period have been described with reference to FIGS. 6-8. The same statement applies to the ringing period of ringing that occurs when the voltage across the V-phase third switching element 6V rises from zero volts and the operation of the controller 50 during the ringing period and the ringing period of ringing that occurs when the voltage across the W-phase third switching element 6W rises from zero volts and the operation of the controller 50 during the ringing period as well. The statement applied to the ringing period of ringing that occurs when the voltage V6u across the U-phase third switching element 6U rises from zero volts and the operation of the controller 50 during the ringing period is also applicable to the ringing period of ringing that occurs when the voltage across the U-phase fourth switching element 7U rises from zero volts and the operation of the controller 50 during the ringing period, the ringing period of ringing that occurs when the voltage across the V-phase fourth switching element 7V rises from zero volts and the operation of the controller 50 during the ringing period, and the ringing period of ringing that occurs when the voltage across the W-phase fourth switching element 7W rises from zero volts and the operation of the controller 50 during the ringing period.

### (3.3) Characteristics

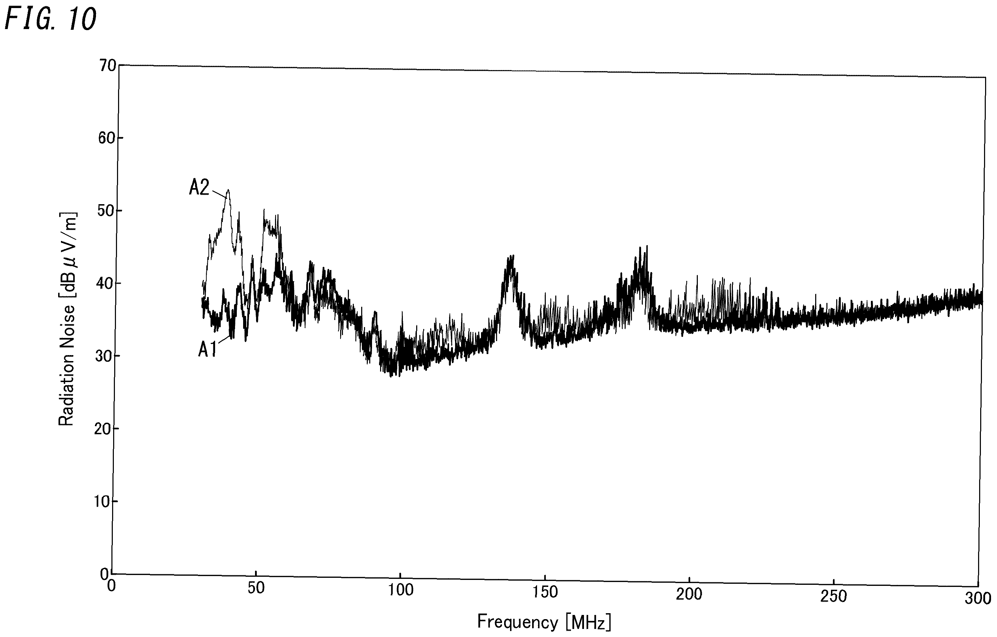

In FIG. 10, A1 indicates a measured value of radiation noise generated in the power converter 100 according to the first embodiment and A2 indicates a measured value of radiation noise generated in a power converter according to a comparative example. In FIG. 10, the abscissa indicates the frequency of the radiation noise, and the ordinate indicates the level of the radiation noise. The radiation noise was measured under the condition compliant with CISPR32 by the 3m method. It can be seen that the power converter 100 according to the first embodiment may reduce the radiation noise compared to the power converter according to the comparative example.

### (4) Advantages

A power converter 100 according to the first embodiment includes a first DC terminal 31 and a second DC terminal 32, a power converter circuit 11, a plurality of switches 8, a plurality of resonant capacitors 9, a plurality of resonant inductors L1, a regenerative capacitor 15, a plurality of AC terminals 41, and a controller 50. The power converter circuit 11 includes a plurality of switching circuits 10. Each of the plurality of switching circuits 10 includes: a first switching element 1 and a second switching element 2 which are connected to each other in series; a first diode 4 connected to the first switching element 1 in antiparallel; and a second diode 5 connected to the second switching element 2 in antiparallel. In the plurality of switching circuits 10, the first switching elements 1 are connected to the first DC terminal 31 and the second switching elements 2 are connected to the second DC terminal 32. Each of the plurality of switches 8 has a first end 81 and a second end 82. The plurality of switches 8 are provided one to one for the plurality of switching circuits 10. Each of the plurality of switches 8 is connected to a connection node 3 between the first switching element 1 and the second switching element 2 of a corresponding one of the plurality of switching circuits 10. The plurality of resonant capacitors 9 are provided one to one for the plurality of switches 8. Each of the plurality of resonant capacitors 9 is connected between the first end 81 of a corresponding one of the plurality of switches 8 and the second DC terminal 32. The plurality of resonant inductors L1 are provided one to one for the plurality of switches 8. Each of the plurality of resonant inductors L1 is connected to the second end 82 of a corresponding one of the plurality of switches 8. The plurality of AC terminals 41 are provided one to one for the plurality of switching circuits 10. Each of the plurality of AC terminals 41 is connected to a connection node 3 between the first switching element 1 and the second switching element 2 of a corresponding one of the plurality of switching circuits 10. The controller 50 controls the plurality of first switching elements 1, the plurality of second switching elements 2, and the plurality of switches 8. Each of the plurality of switches 8 includes a third switching element 6 and a fourth switching element 7. The third switching element 6 causes a current iL1 to flow therethrough from the resonant inductor L1 when the third switching element 6 is in an ON state. The fourth switching element 7 causes a current to flow therethrough in an opposite direction from in the third switching element 6 when the fourth switching element 7 is in an ON state. The controller 50 applies a control signal, of which a potential alternates between a high level and a low level, to each of the plurality of first switching elements 1, the plurality of second switching elements 2, the plurality of third switching elements 6, and the plurality of fourth switching elements 7. The controller 50 sets, with respect to each of the plurality of switching circuits 10, a dead time period Td between a high-level period of the control signal for the first switching element 1 and a high-level period of the control signal for the second switching element 2. The controller 50 allows at least a part of a high-level period of the control signal for each of the plurality of switches 8 to overlap with the dead time period Td. The controller 50 causes, with respect to each of the plurality of switches 8, the third switching element 6 to maintain, during a ringing period in which ringing occurs to a voltage across the third switching element 6, a state just before the ringing period (i.e., ON state).

This configuration allows for reducing the radiation noise.

In the power converter 100 according to the first embodiment, the controller 50 turns OFF the third switching elements 6 corresponding one to one to the plurality of switching circuits 10 at or before the timing to turn OFF the first switching element 1 in each of the plurality of switching circuits 10. Note that the phrase "at or before the timing to turn OFF the first switching element 1" refers to not only a timing earlier than the timing to turn OFF the first switching element 1 but also the timing to turn OFF the first switching element 1 as well.

This configuration allows for making zero-voltage soft switching of the first switching element 1.

In addition, in a ringing period in which ringing occurs to the voltage across the fourth switching element 7, the controller 50 also causes the fourth switching element 7 to maintain the state just before the ringing period. This allows the power converter 100 according to the first embodiment to further reduce the radiation noise.

### (Second embodiment)

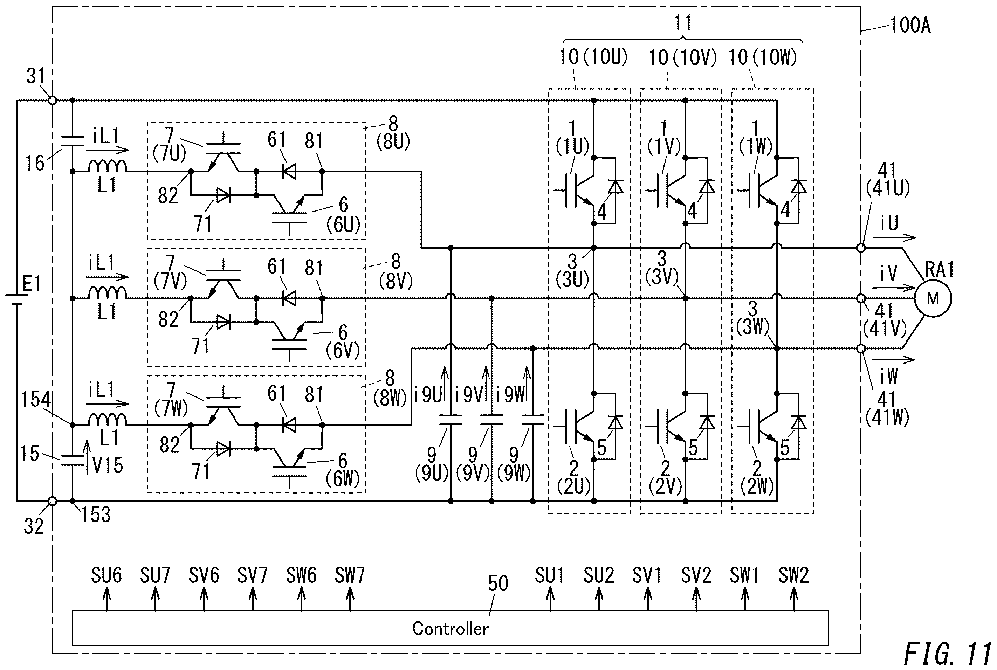

A power converter 100A according to a second embodiment will be described with reference to FIG. 11. In the following description, any constituent element of the power converter 100A according to this second embodiment, having the same function as a counterpart of the power converter 100 according to the first embodiment described above, will be designated by the same reference numeral as that counterpart's, and description thereof will be omitted herein.

### (1) Configuration

The power converter 100A further includes another regenerative capacitor 16 (hereinafter referred to as a "second regenerative capacitor 16") connected between the sixth end 154 of the regenerative capacitor 15 (hereinafter referred to as a "first regenerative capacitor 15") and the first DC terminal 31, which is a difference from the power converter 100.

The second regenerative capacitor 16 is connected to the first regenerative capacitor 15 in series. Thus, in this power converter 100A, a series circuit of the second regenerative capacitor 16 and the first regenerative capacitor 15 is connected between the first DC terminal 31 and the second DC terminal 32. In this power converter 100A, the plurality of resonant inductors L1 are connected to the path between the first regenerative capacitor 15 and the second regenerative capacitor 16. The capacitance of the second regenerative capacitor 16 is the same as the capacitance of the first regenerative capacitor 15. As used herein, the expression "the capacitance of the second regenerative capacitor 16 is the same as the capacitance of the first regenerative capacitor 15" refers to not only a situation where the capacitance of the second regenerative capacitor 16 is exactly equal to the capacitance of the first regenerative capacitor 15 but also a situation where the capacitance of the second regenerative capacitor 16 is equal to or greater than 95% and equal to or less than 105% of the capacitance of the first regenerative capacitor 15 as well.

In the power converter 100A according to the second embodiment, the voltage V15 across the first regenerative capacitor 15 (i.e., the potential at the sixth end 154 of the first regenerative capacitor 15) has a value calculated by dividing the voltage value Vd of the DC power supply E1 by two that is the number of the capacitors provided, namely, the second regenerative capacitor 16 and the first regenerative capacitor 15. Thus, the voltage V15 across the first regenerative capacitor 15 is approximately equal to Vd/2. In the power converter 100A according to the second embodiment, the controller 50 may store, in advance, the value of the voltage V15 across the first regenerative capacitor 15.

### (2) Advantages

The controller 50 of the power converter 100A according to the second embodiment operates in the same way as the controller 50 of the power converter 100 according to the first embodiment. Thus, the power converter 100A according to the second embodiment, as well as the power converter 100 according to the first embodiment, may also reduce the radiation noise.

### (Third embodiment)

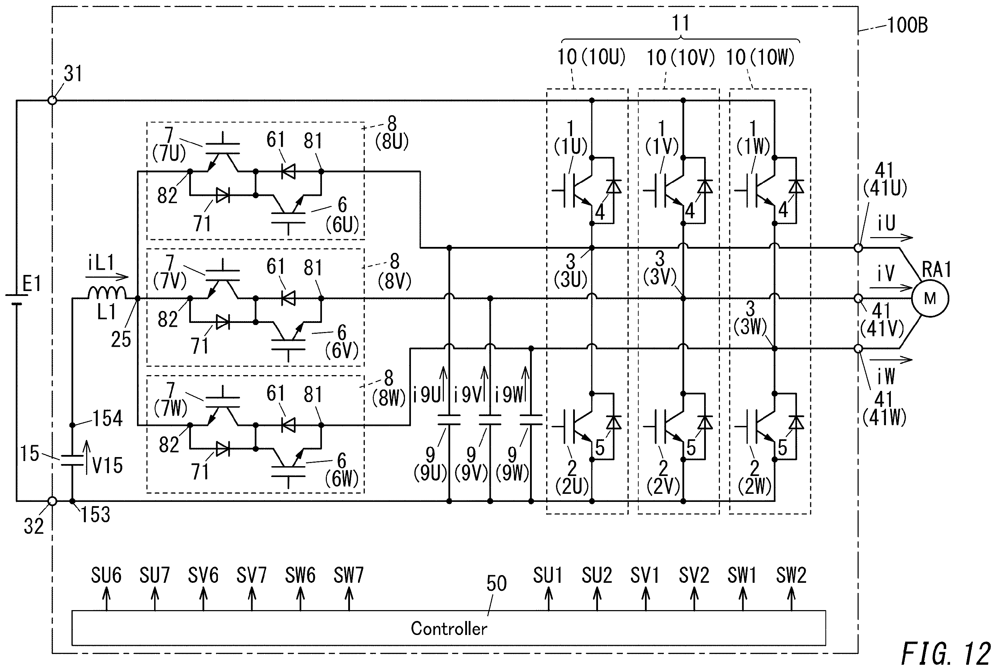

A power converter 100B according to a third embodiment will be described with reference to FIG. 12. In the following description, any constituent element of the power converter 100B according to this third embodiment, having the same function as a counterpart of the power converter 100 according to the first embodiment described above, will be designated by the same reference numeral as that counterpart's, and description thereof will be omitted herein.

### (1) Configuration

The power converter 100B includes only one resonant inductor L1, which is a difference from the power converter 100 according to the first embodiment. In the power converter 100B, the resonant inductor L1 is shared in common by a plurality of resonant circuits. In the power converter 100B, a third end of the resonant inductor L1 is connected to a common connection node 25. The respective second ends 82 of the plurality of switches 8 are connected in common to the common connection node 25.

### (2) Operation of power converter

In the power converter 100B, as well as in the power converter 100, the controller 50 also controls the plurality of (e.g., three in the example shown in FIG. 12) first switching elements 1, the plurality of (e.g., three in the example shown in FIG. 12) second switching elements 2, and the plurality of (e.g., three in the example shown in FIG. 12) switches 8. The controller 50 operates in the same way as the controller 50 of the power converter 100.

### (3) Advantages

In the power converter 100B according to the third embodiment, as well as in the power converter 100 according to the first embodiment, the controller 50 also causes, with respect to each of the plurality of third switching elements 6, the third switching element 6 to maintain, during a ringing period in which ringing occurs to a voltage across the third switching element 6, a state just before the ringing period (i.e., ON state). Thus, the power converter 100B according to the third embodiment, as well as the power converter 100 according to the first embodiment, may also reduce the radiation noise.

In addition, in the power converter 100B according to the third embodiment, the number of the resonant inductors L1 provided is one and the respective second ends 82 of the plurality of switches 8 are connected in common to the single resonant inductor L1. Thus, the power converter 100B according to the third embodiment may contribute to downsizing.

### (Fourth embodiment)

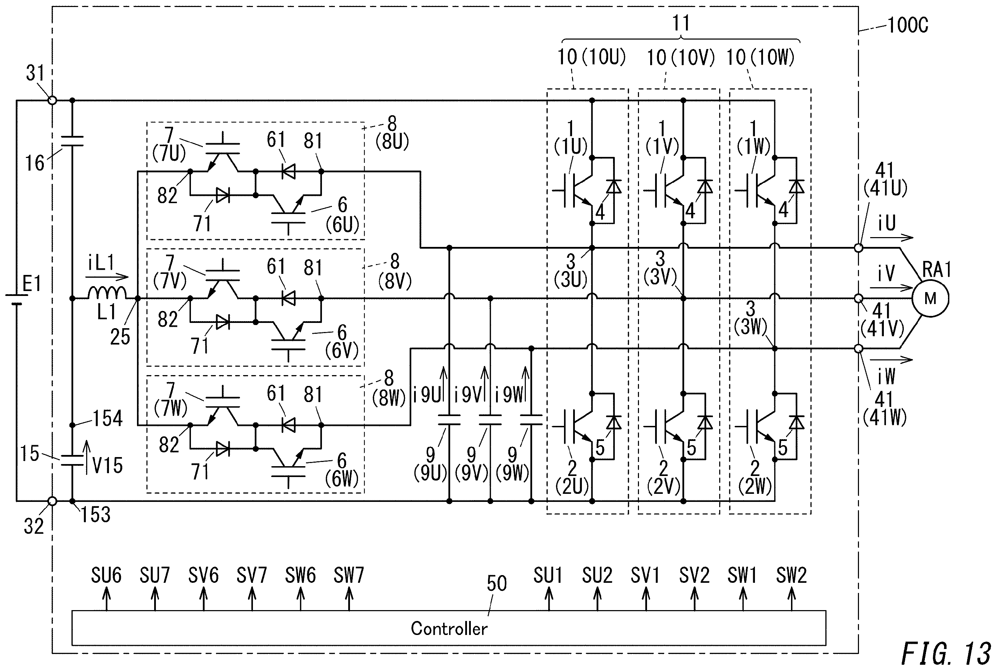

A power converter 100C according to a fourth embodiment will be described with reference to FIG. 13. In the following description, any constituent element of the power converter 100C according to this fourth embodiment, having the same function as a counterpart of the power converter 100B according to the third embodiment described above, will be designated by the same reference numeral as that counterpart's, and description thereof will be omitted herein.

### (1) Configuration

The power converter 100C further includes another regenerative capacitor 16 (hereinafter referred to as a "second regenerative capacitor 16") connected between the sixth end 154 of the regenerative capacitor 15 (hereinafter referred to as a "first regenerative capacitor 15") and the first DC terminal 31, which is a difference from the power converter 100B.

The second regenerative capacitor 16 is connected to the first regenerative capacitor 15 in series. Thus, in this power converter 100C, a series circuit of the second regenerative capacitor 16 and the first regenerative capacitor 15 is connected between the first DC terminal 31 and the second DC terminal 32. The capacitance of the second regenerative capacitor 16 is the same as the capacitance of the first regenerative capacitor 15. As used herein, the expression "the capacitance of the second regenerative capacitor 16 is the same as the capacitance of the first regenerative capacitor 15" refers to not only a situation where the capacitance of the second regenerative capacitor 16 is exactly equal to the capacitance of the first regenerative capacitor 15 but also a situation where the capacitance of the second regenerative capacitor 16 is equal to or greater than 95% and equal to or less than 105% of the capacitance of the first regenerative capacitor 15 as well.

In the power converter 100C according to the fourth embodiment, the voltage V15 across the first regenerative capacitor 15 (i.e., the potential at the sixth end 154 of the first regenerative capacitor 15) has a value calculated by dividing the voltage value Vd of the DC power supply E1 by two that is the number of the capacitors provided, namely, the second regenerative capacitor 16 and the first regenerative capacitor 15. Thus, the voltage V15 across the first regenerative capacitor 15 is approximately equal to Vd/2. In the power converter 100C according to the fourth embodiment, the controller 50 may store, in advance, the value of the voltage V15 across the first regenerative capacitor 15.

### (2) Operation

The controller 50 of the power converter 100C according to the fourth embodiment operates in the same way as the controller 50 of the power converter 100B according to the third embodiment.

### (3) Advantages

The power converter 100C according to the fourth embodiment, as well as the power converter 100B according to the third embodiment, may also reduce the radiation noise.

### (Fifth embodiment)

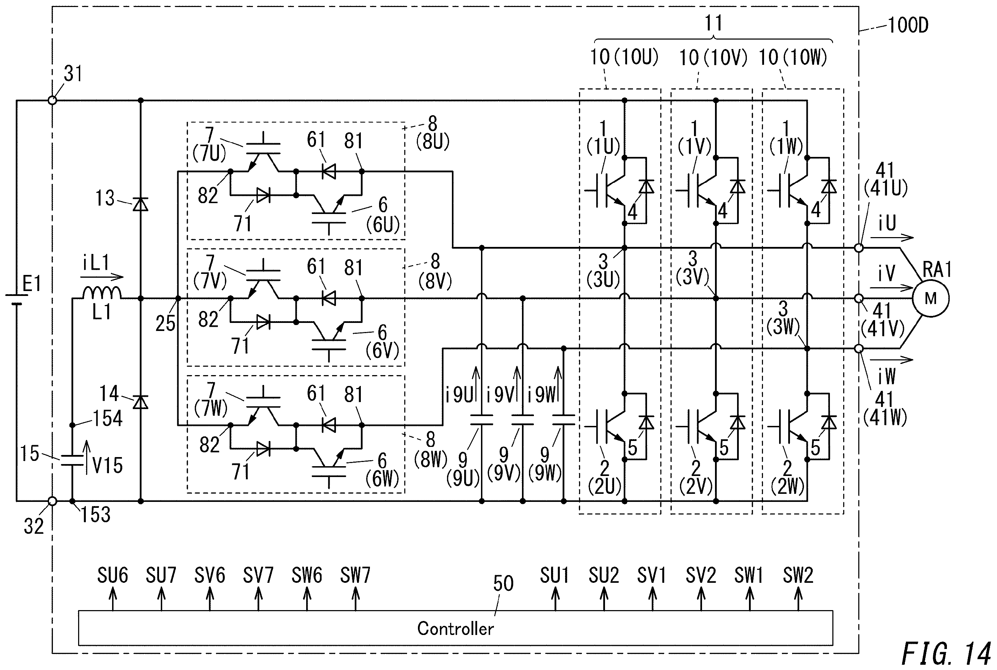

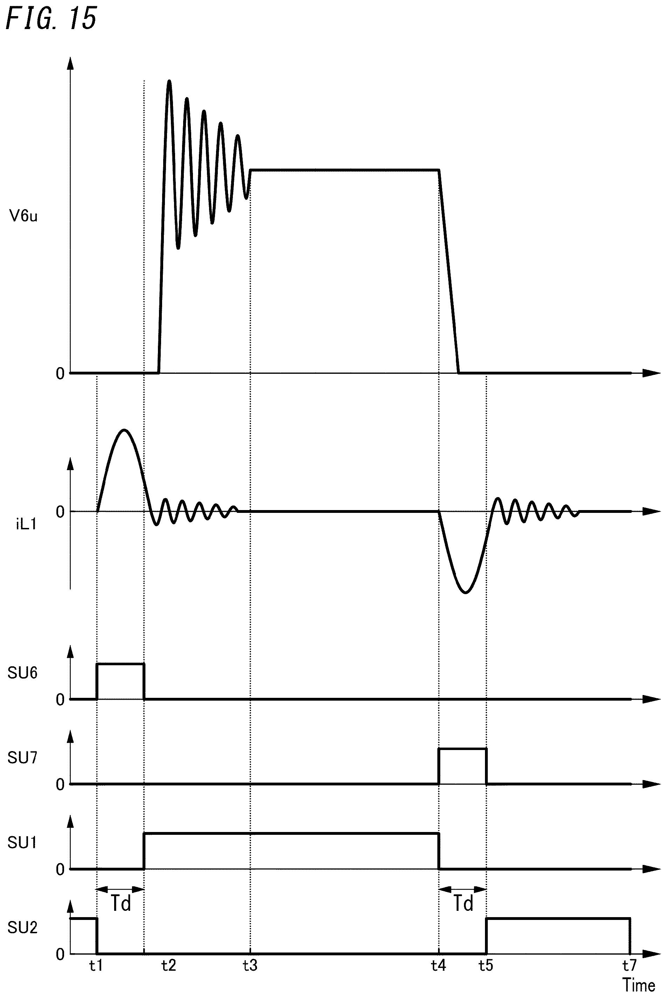

A power converter 100D according to a fifth embodiment will be described with reference to FIGS. 14 and 15. In the following description, any constituent element of the power converter 100D according to this fifth embodiment, having the same function as a counterpart of the power converter 100B according to the third embodiment described above, will be designated by the same reference numeral as that counterpart's, and description thereof will be omitted herein.

### (1) Configuration

The power converter 100D further includes a third diode 13 and a fourth diode 14, which is a difference from the power converter 100B.

In the third diode 13, the anode of the third diode 13 is connected to a connection node between the resonant inductor L1 and the plurality of switches 8. In the third diode 13, the cathode of the third diode 13 is connected to the first DC terminal 31. The fourth diode 14 is connected between the connection node where the resonant inductor L1 and the plurality of switches 8 are connected to each other and the second DC terminal 32. In the fourth diode 14, the anode of the fourth diode 14 is connected to the second DC terminal 32. In the fourth diode 14, the cathode of the fourth diode 14 is connected to the connection node between the resonant inductor L1 and the plurality of switches 8. Thus, the fourth diode 14 is connected to the third diode 13 in series.

### (2) Operation

In the power converter 100D according to the fifth embodiment, the controller 50 turns the third switching element 6 OFF before the current iL1 flowing through the resonant inductor L1 goes zero and causes, during a ringing period in which ringing occurs to the voltage across the third switching element 6, the third switching element 6 to maintain its state (i.e., OFF state) just before the ringing period. More specifically, in making zero-voltage soft switching of the U-phase first switching element 1U, the controller 50 changes the control signal SU6 for the third switching element 6 of the switch 8U from high level to low level before the current iL1 flowing through the resonant inductor L1 goes zero and maintains the potential level of the control signal SU6 at low level during the ringing period in which ringing occurs to the voltage V6u across the third switching element 6 as shown in FIG. 15, for example.

The power converter 100D includes the third diode 13. This allows the current iL1 to flow along a path passing through the third diode 13 even if the third switching element 6 is turned OFF before the current iL1 flowing through the resonant inductor L1 goes zero.

The ringing period of ringing that occurs when the voltage V6u across the U-phase third switching element 6U rises from zero volts and the operation of the controller 50 during the ringing period have been described with reference to FIG. 15. The same statement applies to the ringing period of ringing that occurs when the voltage across the V-phase third switching element 6V rises from zero volts and the operation of the controller 50 during the ringing period and the ringing period of ringing that occurs when the voltage across the W-phase third switching element 6W rises from zero volts and the operation of the controller 50 during the ringing period as well.

### (3) Advantages

In the power converter 100D according to the fifth embodiment, the controller 50 causes, with respect to each of the plurality of switches 8, the third switching element 6 to maintain, during a ringing period in which ringing occurs to a voltage across the third switching element 6, a state just before the ringing period (i.e., ON state). Thus, the power converter 100D may also reduce the radiation noise.

### (4) Variation of fifth embodiment

As in the first embodiment, the controller 50 causes, during the ringing period, the third switching element 6 to maintain its state just before the ringing period (i.e., ON state) and turns OFF the third switching element 6 at the timing when the ringing period ends.

According to this variation of the fifth embodiment, as well as in the first embodiment, the radiation noise may also be reduced.

### (Sixth embodiment)

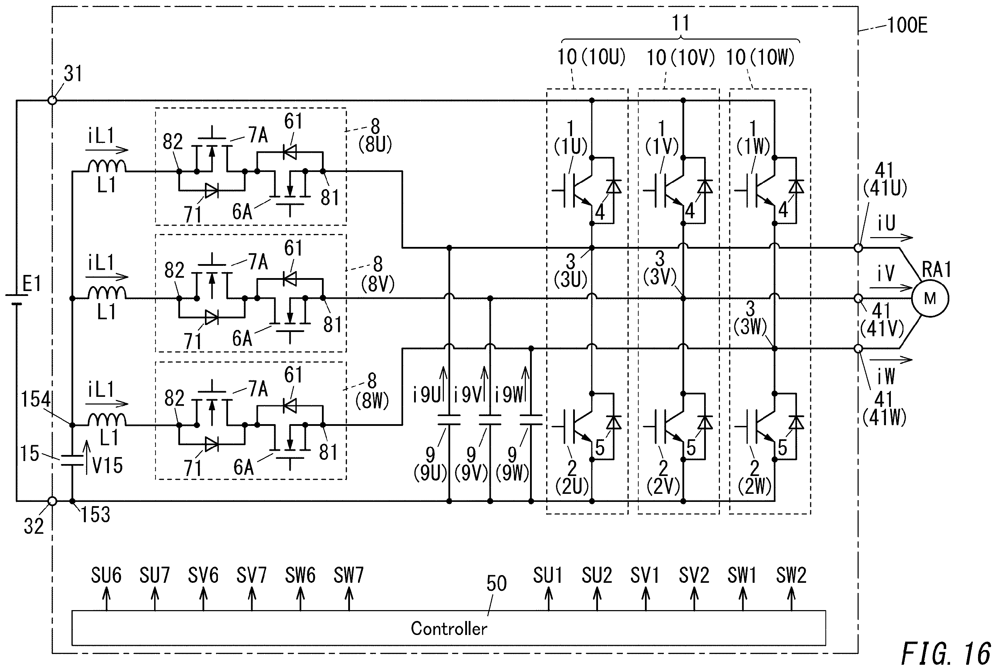

A power converter 100E according to a sixth embodiment will be described with reference to FIG. 16. In the following description, any constituent element of the power converter 100E according to this sixth embodiment, having the same function as a counterpart of the power converter 100 according to the first embodiment described above, will be designated by the same reference numeral as that counterpart's, and description thereof will be omitted herein.

### (1) Configuration

In the power converter 100E, each of the plurality of switches 8 includes a third switching element 6A and a fourth switching element 7A instead of the third switching element 6 and the fourth switching element 7, which is a difference from the power converter 100. Each of the plurality of third switching elements 6A and the plurality of fourth switching elements 7A is a MOSFET. In the power converter 100E, the control terminal, the first main terminal, and the second main terminal of each of the plurality of third switching elements 6A and the plurality of fourth switching elements 7A are a gate terminal, a drain terminal, and a source terminal, respectively. In each of the plurality of switches 8, the third switching element 6A and the fourth switching element 7A are connected in anti-series. In the power converter 100E, in each of the plurality of switches 8, the first main terminal (drain terminal) of the third switching element 6A and the first main terminal (drain terminal) of the fourth switching element 7A are connected to each other. In addition, each of the plurality of switches 8 further includes a diode 61 connected to the third switching element 6A in antiparallel and a diode 71 connected to the fourth switching element 7A in antiparallel. In each of the plurality of switches 8, the second main terminal (source terminal) of the fourth switching element 7A is connected to the resonant inductor L1. In each of the plurality of switches 8, the second main terminal (source terminal) of the third switching element 6A is connected to the connection node 3 of a switching circuit 10 corresponding to the switch 8 including the third switching element 6A. Control signals SU6, SU7 are respectively applied from the controller 50 to the third switching element 6A and fourth switching element 7A of the switch 8U. Control signals SV6, SV7 are respectively applied from the controller 50 to the third switching element 6A and fourth switching element 7A of the switch 8V. Control signals SW6, SW7 are respectively applied from the controller 50 to the third switching element 6A and fourth switching element 7A of the switch 8W.

### (2) Operation of power converter

The power converter 100E operates in the same way as the power converter 100, for example.

### (3) Advantages

The power converter 100E according to the sixth embodiment, as well as the power converter 100 according to the first embodiment, may also reduce the radiation noise.

### (Seventh embodiment)

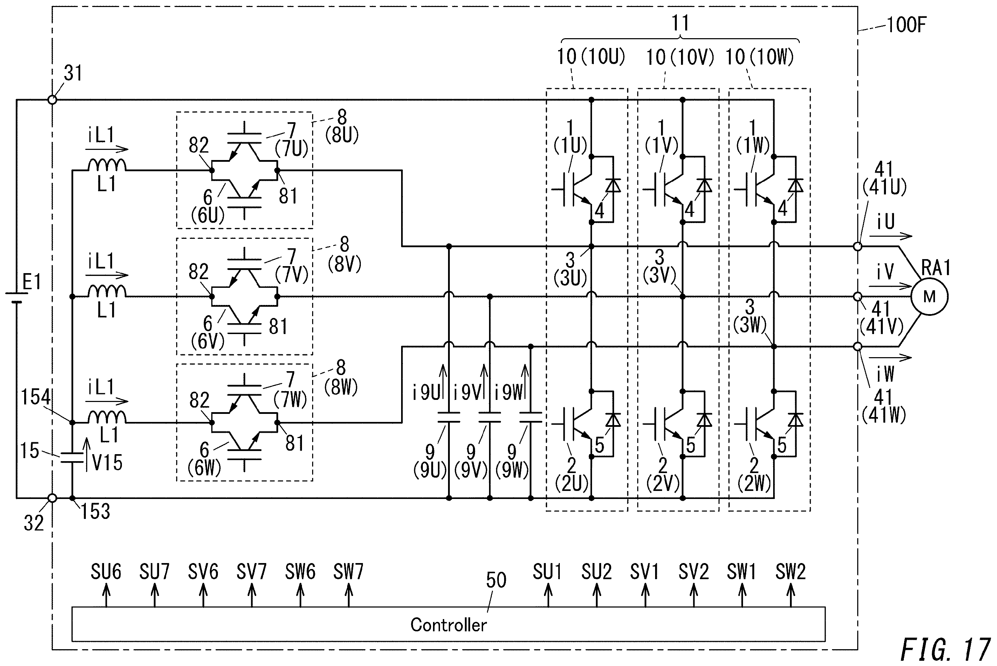

A power converter 100F according to a seventh embodiment will be described with reference to FIG. 17. In the following description, any constituent element of the power converter 100F according to this seventh embodiment, having the same function as a counterpart of the power converter 100 according to the first embodiment described above, will be designated by the same reference numeral as that counterpart's, and description thereof will be omitted herein.

### (1) Configuration

In the power converter 100F, each of the plurality of switches 8 includes, for example, two switching elements, namely, a third switching element 6 and a fourth switching element 7, which are connected to each other in antiparallel. In each of the plurality of switches 8, the first main terminal (collector terminal) of the third switching element 6 and the second main terminal (emitter terminal) of the fourth switching element 7 are connected to each other and the second main terminal (emitter terminal) of the third switching element 6 and the first main terminal (collector terminal) of the fourth switching element 7 are connected to each other. In each of the plurality of switches 8, the second main terminal (emitter terminal) of the third switching element 6 is connected to the connection node 3 of the switching circuit 10 corresponding to the switch 8 including the third switching element 6. In each of the plurality of switches 8, the first main terminal (collector terminal) of the fourth switching element 7 is connected to the connection node 3 of the switching circuit 10 corresponding to the switch 8 including the fourth switching element 7. More specifically, the switch 8U is connected to the connection node 3U between the first switching element 1U and the second switching element 2U. The switch 8V is connected to the connection node 3V between the first switching element 1V and the second switching element 2V The switch 8W is connected to the connection node 3W between the first switching element 1W and the second switching element 2W.

### (2) Operation of power converter

The power converter 100F operates in the same way as the power converter 100, for example.

### (3) Advantages

The power converter 100F according to the seventh embodiment, as well as the power converter 100 according to the first embodiment, may also reduce the radiation noise.

### (Eighth embodiment)

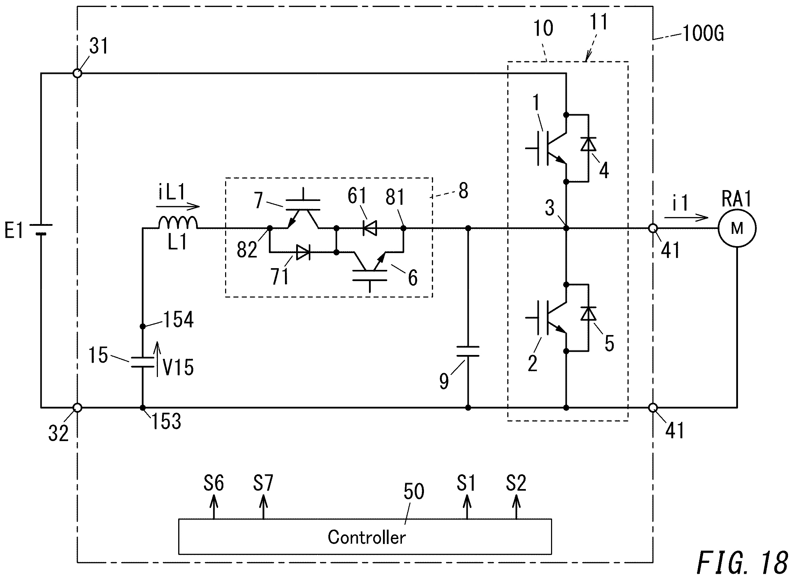

A power converter 100G according to an eighth embodiment will be described with reference to FIG. 18. In the following description, any constituent element of the power converter 100G according to this eighth embodiment, having the same function as a counterpart of the power converter 100 according to the first embodiment described above, will be designated by the same reference numeral as that counterpart's, and description thereof will be omitted herein.

### (1) Configuration

The power converter 100G includes a first DC terminal 31 and a second DC terminal 32, and two AC terminals 41 as shown in FIG. 18, for example. In the power converter 100G, a DC power supply E1 is connected between the first DC terminal 31 and the second DC terminal 32 and an AC load RA1 is connected to the two AC terminals 41. The AC load RA1 may be, for example, an AC motor. The power converter 100 converts the DC output of the DC power supply E1 into AC power and outputs the AC power to the AC load RA1. The DC power supply E1 may include, for example, a solar cell or a fuel cell. The DC power supply E1 may include a DC-DC converter.

In the power converter 100G according to the eighth embodiment, the power converter circuit 11 includes only one switching circuit 10, which is a difference from the power converter 100 according to the first embodiment. In addition, in the power converter 100G according to the eighth embodiment, one AC terminal 41 out of the two AC terminals 41 is connected to a connection node 3 between the first switching element 1 and the second switching element 2, and the other AC terminal is connected to the second DC terminal 32, which is another difference from the power converter 100. Furthermore, the power converter 100G according to the eighth embodiment includes only one switch 8, only one resonant inductor L1, and only one resonant capacitor 9, which is still another difference from the power converter 100.

The controller 50 controls each of the first switching element 1, the second switching element 2, and the switch 8. The controller 50 outputs a control signal S1 for controlling the first switching element 1, a control signal S2 for controlling the second switching element 2, a control signal S6 for controlling the third switching element 6, and a control signal S7 for controlling the fourth switching element 7.

### (2) Operation of power converter

In this power converter 100G, the controller 50 controls the first switching element 1, the second switching element 2, and the switch 8. The controller 50 operates in the same way as the controller 50 of the power converter 100. More specifically, the control signals S1, S2, S6, S7 output by the controller 50 of the power converter 100G are the same as the control signals SU1, SU2, SU6, SU7 (refer to FIGS. 1, 3, and 8) output by the controller 50 of the power converter 100.

### (3) Advantages

A power converter 100G according to the eighth embodiment includes a first DC terminal 31 and a second DC terminal 32, a power converter circuit 11, a switch 8, a resonant capacitor 9, a resonant inductor L1, a regenerative capacitor 15, and a controller 50. The power converter circuit 11 includes a switching circuit 10. The switching circuit 10 includes: a first switching element 1 and a second switching element 2 which are connected to each other in series; a first diode 4 connected to the first switching element 1 in antiparallel; and a second diode 5 connected to the second switching element 2 in antiparallel. In the switching circuit 10, the first switching element 1 is connected to the first DC terminal 31 and the second switching element 2 is connected to the second DC terminal 32. The switch 8 has a first end 81 and a second end 82. The switch 8 has the first end 81 connected to a connection node 3 between the first switching element 1 and the second switching element 2. The resonant capacitor 9 is connected between the first end 81 of the switch 8 and the second DC terminal 32. The resonant inductor L1 is connected to the second end 82 of the switch 8. The regenerative capacitor 15 is connected between the resonant inductor L1 and the second DC terminal 32. The controller 50 controls the first switching element 1, the second switching element 2, and the switch 8. The switch 8 includes a third switching element 6 and a fourth switching element 7. The third switching element 6 causes a current iL1 to flow therethrough from the resonant inductor L1 when the third switching element 6 is in an ON state. The fourth switching element 7 causes a current to flow therethrough in an opposite direction from in the third switching element 6 when the fourth switching element 7 is in an ON state. The controller 50 applies control signals S1, S2, S6, S7, of which a potential alternates between a high level and a low level, to the first switching element 1, the second switching element 2, the third switching element 6, and the fourth switching element 7, respectively. The controller 50 sets a dead time period Td (refer to FIG. 8) between a high-level period of the control signal S1 for the first switching element 1 and a high-level period of the control signal S2 for the second switching element 2. The controller 50 allows at least a part of a high-level period of the control signal S6 for the third switching element 6 to overlap with the dead time period Td. The controller 50 causes the third switching element 6 to maintain, during a ringing period in which ringing occurs to a voltage across the third switching element 6, its state just before the ringing period.

This configuration allows for reducing the radiation noise.

### (Other variations)

Note that the first to eighth embodiments and their variations described above are only exemplary ones of various embodiments of the present disclosure and their variations and should not be construed as limiting. Rather, the first to eighth exemplary embodiments and their variations may be readily modified in various manners depending on a design choice or any other factor without departing from the scope of the present disclosure.

In the power converter 100, the diodes 61, 71 are connected as external components to the third switching element 6 and the fourth switching element 7, respectively. However, this is only an example and should not be construed as limiting. Each of the diodes 61, 71 may also be an element built in the same chip as the third switching element 6 or the fourth switching element 7.

Also, in the power converter 100G, the switch 8 has the same configuration as the switch 8 of the power converter 100. Alternatively, the switch 8 of the power converter 100G may also have the same configuration as the switch 8 of the power converter 100E or the switch 8 of the power converter 100F, whichever is appropriate.

Optionally, in the power converters 100, 100A, 100B, 100C, 100D, 100E, 100F, 100G, if the plurality of resonant capacitors 9 each have a relatively small capacitance, then the parasitic capacitors across the plurality of second switching elements 2 may also serve as the plurality of resonant capacitors 9 instead of providing the plurality of resonant capacitors 9 as separate elements.

Furthermore, in the embodiments described above, the length of the dead time period Td is set to be as long as one resonant half cycle. However, the length of the dead time period Td may also be set to be different from one resonant half cycle. As used herein, "one resonant half cycle" is one half of one resonant cycle, which is the reciprocal of a resonant frequency of a resonant circuit including the resonant inductor L1 and one resonant capacitor 9.

The dead time period Td may also be set by a dead time generator circuit included in, for example, a gate driver integrated circuit (IC) provided separately from the controller 50. Alternatively, the controller 50 may include a gate driver IC and a dead time generator circuit included in the gate driver IC may set the dead time period Td.

Furthermore, the power converter 100, 100A, 100B, 100C, 100D, 100E, 100F does not have to be configured to output three-phase AC power but may also be configured to output multiphase AC power in more than three phases.

Optionally, the controller 50 may make the beginning time of the high-level period of each of the control signals SU6, SV6, SW6 earlier by an additional time than the beginning time of the dead time period Td. To start producing LC resonance at the beginning time of the dead time period Td, the controller 50 determines the additional time based on the load current such that the current iL1 and the load current of the same phase are equal to each other at the beginning time of the dead time period Td. More specifically, using either the detection result of the load current by a current sensor or a signal processing value thereof, or an estimated value of the load current, the inductance L of the resonant inductor L1 that has been stored in advance, and the detection result of the voltage V15 across the regenerative capacitor 15, for example, the controller 50 determines the additional time by the equation: additional time = load current × (L/V15). In this case, as the detection result of the load current or the signal processing value thereof, either a detection value at a carrier cycle at which the additional time is added or a detection value at a timing closest to the carrier cycle may be used. Also, in this case, as the estimated value of the load current, a value of the load current estimated at the carrier cycle at which the additional time is added may be used, for example.

### (Aspects)

The foregoing description provides specific implementations for the following aspects of the present disclosure.

A power converter (100; 100A; 100B; 100C; 100D; 100E; 100F; 100G) according to a first aspect includes a first DC terminal (31) and a second DC terminal (32), a power converter circuit (11), a switch (8), a resonant capacitor (9), a resonant inductor (L1), a regenerative capacitor (15), and a controller (50). The power converter circuit (11) includes a switching circuit (10). The switching circuit (10) includes: a first switching element (1) and a second switching element (2) which are connected to each other in series; a first diode (4) connected to the first switching element (1) in antiparallel; and a second diode (5) connected to the second switching element (2) in antiparallel. In the switching circuit (10), the first switching element (1) is connected to the first DC terminal (31) and the second switching element (2) is connected to the second DC terminal (32). The switch (8) has a first end (81) and a second end (82). The switch (8) has the first end (81) connected to a connection node (3) between the first switching element (1) and the second switching element (2). The resonant capacitor (9) is connected between the first end (81) of the switch (8) and the second DC terminal (32). The resonant inductor (L1) is connected to the second end (82) of the switch (8). The regenerative capacitor (15) is connected between the resonant inductor (L1) and the second DC terminal (32). The controller (50) controls the first switching element (1), the second switching element (2), and the switch (8). The switch (8) includes a third switching element (6; 6A) and a fourth switching element (7; 7A). The third switching element (6; 6A) causes a current (iL1) to flow therethrough from the resonant inductor (L1) when the third switching element (6; 6A) is in an ON state. The fourth switching element (7; 7A) causes a current to flow therethrough in an opposite direction from in the third switching element (6; 6A) when the fourth switching element (7; 7A) is in an ON state. The controller (50) applies a control signal, of which a potential alternates between a high level and a low level, to each of the first switching element (1), the second switching element (2), the third switching element (6; 6A), and the fourth switching element (7; 7A). The controller (50) sets a dead time period (Td) between a high-level period of the control signal for the first switching element (1) and a high-level period of the control signal for the second switching element (2). The controller (50) allows at least a part of a high-level period of the control signal for the third switching element (6; 6A) to overlap with the dead time period (Td). The controller (50) causes the third switching element (6; 6A) to maintain, during a ringing period in which ringing occurs to a voltage across the third switching element (6; 6A), a state just before the ringing period.

This aspect allows for reducing radiation noise.

In a power converter (100; 100A; 100B; 100C; 100E; 100F; 100G) according to a second aspect, which may be implemented in conjunction with the first aspect, the controller (50) causes the third switching element (6; 6A) to maintain the ON state during the ringing period.

In a power converter (100; 100A; 100B; 100C; 100D; 100E; 100F; 100G) according to a third aspect, which may be implemented in conjunction with the first aspect, the controller (50) turns OFF the third switching element (6; 6A) before a timing to turn OFF a switching element selected from the group consisting of the first switching element (1) and the second switching element (2) which is to be subjected to zero-voltage soft switching.

This aspect allows the first switching element (1) to be subjected to zero-voltage soft switching.

In a power converter (100; 100A; 100B; 100C; 100E; 100F; 100G) according to a fourth aspect, which may be implemented in conjunction with the first aspect, the controller (50) is configured to control the third switching element (6; 6A) by defining a timing when a voltage across the third switching element (6; 6A) becomes equal to or less than a threshold value to be an end timing of the ringing period. The controller (50) maintains the third switching element (6; 6A) in the ON state during the ringing period. The controller (50) turns OFF the third switching element (6; 6A) at the end timing of the ringing period.

This aspect allows the first switching element (1) to be subjected to zero-voltage soft switching.

A power converter (100D) according to a fifth aspect, which may be implemented in conjunction with the first aspect, further includes a third diode (13) and a fourth diode (14). The third diode (13) has an anode connected to a connection node between the switch (8) and the resonant inductor (L1) and has a cathode connected to the first DC terminal (31). The fourth diode (14) has an anode connected to the connection node between the switch (8) and the resonant inductor (L1) and has a cathode connected to the second DC terminal (32).

This aspect allows a control of keeping the third switching element (6; 6A) OFF to be performed during the ringing period.

In a power converter (100; 100A; 100E; 100F) according to a sixth aspect, which may be implemented in conjunction with any one of the first to fifth aspects, the power converter circuit (11) includes a plurality of the switching circuits (10). The power converter (100) includes: a plurality of the switches (8); a plurality of the resonant capacitors (9); and a plurality of the resonant inductors (L1). The power converter (100) further includes a plurality of AC terminals (41). The plurality of the switches (8) are provided one to one for the plurality of the switching circuits (10). Each of the plurality of the switches (8) is connected to a connection node (3) where the first switching element (1) and the second switching element (2) of a corresponding one of the plurality of the switching circuits (10) are connected to each other. The plurality of the resonant capacitors (9) are provided one to one for the plurality of the switches (8). Each of the plurality of the resonant capacitors (9) is connected between the first end (81) of a corresponding one of the plurality of the switches (8) and the second DC terminal (32). The plurality of the resonant inductors (L1) are provided one to one for the plurality of the switches (8). Each of the plurality of the resonant inductors (L1) is connected to the second end (82) of a corresponding one of the plurality of the switches (8). The plurality of AC terminals (41) are provided one to one for the plurality of the switching circuits (10). Each of the plurality of AC terminals (41) is connected to a connection node (3) between the first switching element (1) and the second switching element (2) of a corresponding one of the plurality of the switching circuits (10). The plurality of the switches (8) includes a plurality of the third switching elements (6; 6A) and a plurality of the fourth switching elements (7; 7A). The controller (50) controls the plurality of the first switching elements (1), the plurality of the second switching elements (2), the plurality of the third switching elements (6; 6A), and the plurality of the fourth switching elements (7; 7A).

In a power converter (100B; 100C; 100D) according to a seventh aspect, which may be implemented in conjunction with any one of the first to fifth aspects, the power converter circuit (11) includes a plurality of the switching circuits (10). The power converter (100) includes: a plurality of the switches (8) and a plurality of the resonant capacitors (9). The power converter (100) further includes a plurality of AC terminals (41). The plurality of the switches (8) are provided one to one for the plurality of the switching circuits (10). Each of the plurality of the switches (8) is connected to a connection node (3) between the first switching element (1) and the second switching element (2) of a corresponding one of the plurality of the switching circuits (10). The plurality of the resonant capacitors (9) are provided one to one for the plurality of the switches (8). Each of the plurality of the resonant capacitors (9) is connected between the first end (81) of a corresponding one of the plurality of the switches (8) and the second DC terminal (32). The plurality of AC terminals (41) are provided one to one for the plurality of the switching circuits (10). Each of the plurality of AC terminals (41) is connected to a connection node (3) between the first switching element (1) and the second switching element (2) of a corresponding one of the plurality of the switching circuits (10). The respective second ends (82) of the plurality of the switches (8) are connected in common to the resonant inductor (L1). The plurality of the switches (8) includes a plurality of the third switching elements (6; 6A) and a plurality of the fourth switching elements (7; 7A). The controller (50) controls the plurality of the first switching elements (1), the plurality of the second switching elements (2), the plurality of the third switching elements (6; 6A), and the plurality of the fourth switching elements (7; 7A).

This aspect allows the number of the resonant inductors (L1) provided to be reduced to one, thus contributing to downsizing.

### Reference Signs List

1 First Switching Element
2 Second Switching Element
3 Connection Node
4 First Diode
5 Second Diode
6, 6A Third Switching Element
7, 7A Fourth Switching Element
8 Switch
81 First End
82 Second End
9 Resonant Capacitor
10 Switching Circuit
13 Third Diode
14 Fourth Diode
11 Power Converter Circuit
15 Regenerative Capacitor
153 Fifth End
154 Sixth End
31 First DC Terminal
32 Second DC Terminal
41 AC Terminal
50 Controller
100, 100A, 100B, 100C, 100D, 100E, 100F, 100G Power Converter
iU, iV, iW Output Current (Load Current)
L1 Resonant Inductor
RA1 AC Load
SU1, SU2, SU6, SU7 Control Signal
SV1, SV2, SV6, SV7 Control Signal
SW1, SW2, SW6, SW7 Control Signal
Td Dead Time Period
V15 Voltage

## Claims

1. A power converter comprising:
a first DC terminal and a second DC terminal;
a power converter circuit including a switching circuit, the switching circuit including: a first switching element and a second switching element which are connected to each other in series; a first diode connected to the first switching element in antiparallel; and a second diode connected to the second switching element in antiparallel, the first switching element being connected, in the switching circuit, to the first DC terminal, the second switching element being connected, in the switching circuit, to the second DC terminal;
a switch having a first end and a second end, the switch having the first end connected to a connection node between the first switching element and the second switching element;
a resonant capacitor connected between the first end of the switch and the second DC terminal;
a resonant inductor connected to the second end of the switch;
a regenerative capacitor connected between the resonant inductor and the second DC terminal; and
a controller configured to control the first switching element, the second switching element, and the switch,
the switch including:
a third switching element configured to cause a current to flow therethrough from the resonant inductor when the third switching element is in an ON state; and
a fourth switching element configured to cause a current to flow therethrough in an opposite direction from in the third switching element when the fourth switching element is in an ON state,
the controller being configured to:
apply a control signal, of which a potential alternates between a high level and a low level, to each of the first switching element, the second switching element, the third switching element, and the fourth switching element;
set a dead time period between a high-level period of the control signal for the first switching element and a high-level period of the control signal for the second switching element;
allow at least a part of a high-level period of the control signal for the third switching element to overlap with the dead time period; and
cause the third switching element to maintain, during a ringing period in which ringing occurs to a voltage across the third switching element, a state just before the ringing period.

2. The power converter of claim 1, wherein
the controller is configured to cause the third switching element to maintain the ON state during the ringing period.

3. The power converter of claim 1, wherein
the controller is configured to turn OFF the third switching element before a timing to turn OFF a switching element selected from the group consisting of the first switching element and the second switching element which is to be subjected to zero-voltage soft switching.

4. The power converter of claim 1, wherein
the controller is configured to control the switch by defining a timing when a voltage between the first end and the second end of the third switching element becomes equal to or less than a threshold value to be an end timing of the ringing period, and
the controller is configured to:
maintain the switch in the ON state during the ringing period, and
turn OFF the third switching element at the end timing.

5. The power converter of claim 1, further comprising:
a third diode having: an anode connected to a connection node between the switch and resonant inductor; and a cathode connected to the first DC terminal; and
a fourth diode having: an anode connected to the connection node between the switch and the resonant inductor; and a cathode connected to the second DC terminal.

6. The power converter of any one of claims 1 to 5, wherein
the power converter circuit includes a plurality of the switching circuits,
the power converter includes:
a plurality of the switches;
a plurality of the resonant capacitors; and
a plurality of the resonant inductors,
the power converter further includes a plurality of AC terminals,
the plurality of the switches are provided one to one for the plurality of the switching circuits, each of the plurality of the switches is connected to a connection node between the first switching element and the second switching element of a corresponding one of the plurality of the switching circuits,
the plurality of the resonant capacitors are provided one to one for the plurality of the switches, each of the plurality of the resonant capacitors is connected between the first end of a corresponding one of the plurality of the switches and the second DC terminal,
the plurality of the resonant inductors are provided one to one for the plurality of the switches, each of the plurality of the resonant inductors is connected to the second end of a corresponding one of the plurality of the switches,
the plurality of AC terminals are provided one to one for the plurality of the switching circuits, each of the plurality of AC terminals is connected to a connection node between the first switching element and the second switching element of a corresponding one of the plurality of the switching circuits,
the plurality of the switches includes a plurality of the third switching elements and a plurality of the fourth switching elements, and
the controller is configured to control the plurality of the first switching elements, the plurality of the second switching elements, the plurality of the third switching elements, and the plurality of the fourth switching elements.

7. The power converter of any one of claims 1 to 5, wherein
the power converter circuit includes a plurality of the switching circuits,
the power converter includes:
a plurality of the switches; and
a plurality of the resonant capacitors;
the power converter further includes a plurality of AC terminals,
the plurality of the switches are provided one to one for the plurality of the switching circuits, each of the plurality of the switches is connected to a connection node between the first switching element and the second switching element of a corresponding one of the plurality of the switching circuits,
the plurality of the resonant capacitors are provided one to one for the plurality of the switches, each of the plurality of the resonant capacitors is connected between the first end of a corresponding one of the plurality of the switches and the second DC terminal,
the plurality of AC terminals are provided one to one for the plurality of the switching circuits, each of the plurality of AC terminals is connected to a connection node between the first switching element and the second switching element of a corresponding one of the plurality of the switching circuits,
the respective second ends of the plurality of the switches are connected in common to the resonant inductor,
the plurality of the switches includes a plurality of the third switching elements and a plurality of the fourth switching elements, and
the controller is configured to control the plurality of the first switching elements, the plurality of the second switching elements, the plurality of the third switching elements, and the plurality of the fourth switching elements.
